(19) Europäisches Patentamt
European Patent Office
Office européen des brevets

(11) **EP 4 668 813 A1**

(12) **EUROPÄISCHE PATENTANMELDUNG**

(43) Veröffentlichungstag:
**24.12.2025 Patentblatt 2025/52**

(21) Anmeldenummer: **24182979.5**

(22) Anmeldetag: **19.06.2024**

(51) Internationale Patentklassifikation (IPC):
**H04W 12/033** (2021.01)    **H04W 12/122** (2021.01)
**H04B 7/06** (2006.01)

(52) Gemeinsame Patentklassifikation (CPC):
**H04W 12/033; H04B 7/0617; H04W 12/122**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **Deutsche Telekom AG**
  **53113 Bonn (DE)**
• **Technische Universität München**
  **80333 München (DE)**

(72) Erfinder:
• **GEITZ, Marc**
  **58089 Hagen (DE)**
• **MÖNICH, Ullrich**
  **81369 München (DE)**
• **BOCHE, Holger**
  **10318 Berlin (DE)**

(74) Vertreter: **2SPL Patentanwälte PartG mbB**
  **Landaubogen 3**
  **81373 München (DE)**

(54) **VERFAHREN, VORRICHTUNGEN UND COMPUTERPROGRAMME ZUR KONTROLLE VON SENDERN UND EMPFÄNGERN UND ZUR SICHERUNG EINER FUNKVERBINDUNG, KONTROLLINSTANZ, SENDER, EMPFÄNGER, MOBILFUNKSYSTEM**

(57) Die vorliegende Offenbarung betrifft Verfahren, Vorrichtungen und Computerprogramme zur Kontrolle eines Senders und eines Empfängers und zur Sicherung einer Funkverbindung zwischen dem Sender und dem Empfänger in einem Mobilfunksystem, einen Sender, einem Empfänger und ein Mobilfunksystem. Das Verfahren (10) zur Kontrolle ein oder mehrerer Sender (300) und zur Sicherung einer Funkverbindung zwischen einem Sender (300) und einem Empfänger (400) in einem Mobilfunksystem (500), umfasst ein Fokussieren (11) eines Antennenstrahls mit einer oder mehreren Antennen, sodass der Empfänger (400) in einer Hauptabstrahlrichtung des Antennenstrahls liegt und eine Halbwertsbreite des Antennenstrahls kleiner als 1% eines Abstands zu den ein oder mehreren Antennen ist und ein Einfügen (12), auf der physikalischen Schicht, von zusätzlichen Rauschanteilen in eine Nachricht für den Empfänger (400), um eine geschützte Nachricht für den Empfänger (400) zu erhalten, wobei das Einfügen (12) der Rauschanteile auf einer oder mehreren auch dem Empfänger (400) bekannten Zufallszahlen beruht. Das Verfahren (10) umfasst ferner ein Senden (13) der geschützten Nachricht an den Empfänger (400) über den Antennenstrahl.

Fig. 1

**Beschreibung**

**Technisches Gebiet**

Die vorliegende Offenbarung betrifft Verfahren, Vorrichtungen und Computerprogramme zur Kontrolle eines Senders und eines Empfängers und zur Sicherung einer Funkverbindung zwischen dem Sender und dem Empfänger in einem Mobilfunksystem, einen Sender, einen Empfänger, ein Mobilfunksystem, insbesondere aber nicht ausschließlich, ein Konzept zur Sicherung von Funkverbindungen in einem Mobilfunksystem vor Abhörern, unter Nutzung von fokussierten Antennenstrahlen in Kombination mit auf der physikalischen Schicht zusätzlich eingefügten Rauschanteilen.

**Hintergrund**

Aus der konventionellen Technik sind Mobilfunksysteme bekannt, die dem stetig steigenden Datenbedarf der Nutzer nachkommen. Beispielsweise 3GPP (3rd Generation Partnership Project) hat bereits mehrere Generationen von Mobilfunkstandards spezifiziert.

Die Abkürzung "6G" (von 6th Generation) beschreibt die zukünftige Generation von Mobilfunknetzwerken, die höchstwahrscheinlich ab 2030 eingeführt werden wird. 6G zeichnet sich durch die nachfolgenden Features (Merkmalen) aus:

- Nutzung neuer, bisher noch nicht verwendeter, Spektralbereiche für Mobilfunkanwendungen. Die Spektralbereiche umfassen 7-20GHz (mid-band) inkl. Massive Multiple-Input-and-Output (MIMO), 460-694 MHz (low band) für bestmögliche Mobilfunkabdeckung, zudem die Nutzung des sub-THz Spektrums (90GHz-300GHz) für maximalen Durchsatz von bis zu 100Gbit/Sekunde.

- Extrem hohe Datentransferraten bis zu 1-100 Gbit /Sekunde.
- Ultra Low-Latency Verbindungen bis zu 0,1 ms Latenz.
- Bestmöglicher Support von Machine-to-Machine (M2M, Kommunikation von Maschine zu Maschine) Verbindungen, die die Verbesserungen in Durchsatz und Latenz ausnutzen können. Als Beispiele sind hier das autonome Fahren und Fliegen, IoT Use Cases (Internet of Things, Internet der Dinge Anwendungsfälle) oder Campusnetzwerke zu nennen.
- Neue Architekturen, insbesondere die Erweiterung der Mobilfunknetzwerke in die dritte Dimension über Non-Terrestrial-Netzwerke (NTN, nicht-terrestrische Netzwerke).
- Fokus auf Energieeffizienz, Resilienz und Sicherheit.

Die Konzepte des zukünftigen 6G Netzwerks werden zurzeit erforscht. In den Folgejahren werden diese standardisiert, um dann von den Systemherstellern gebaut und den Telekommunikationsprovidern betrieben zu werden.

Die Kommunikationssicherheit und die Resilienz der 6G Netzwerke müssen so geplant und realisiert werden, dass sie robust und sicher gegenüber zukünftigen Gefahren sind. So bedrohen Quantencomputer die Sicherheit der aktuell verwendeten asynchronen Kryptographie. Staatliche Akteure und Hackergruppen bedrohen die IT-Sicherheit (Informationstechnik) und die Sicherheit der Kommunikationsnetzwerke. Mit wachsender Digitalisierung werden immer mehr systemrelevante Prozesse in die Welt der digitalen Kommunikationsnetzwerke und der IT verlagert, was die Notwendigkeit nach bestmöglicher Sicherheit in diesen Systemen verlangt.

**Zusammenfassung**

Ausführungsbeispiele basieren auf dem Kerngedanken, dass die Abhörsicherheit durch Kombination von Strahlformung und dem Einfügen von zusätzlichen Rauschanteilen auf der physikalischen Schicht einer Funkverbindung erzielt werden kann. Das Einfügen von zusätzlichen Rauschanteilen kann eine Nachricht schützen, sofern die Empfangsqualität beim legitimen Empfänger besser ist als bei einem Abhörer. Strahlformung kann die abgestrahlte Energie auf einen räumlichen Bereich fokussieren und damit die Abhörmöglichkeit auf einen räumlichen Bereich einschränken. Wird der räumliche Bereich weit genug eingeschränkt, so müsste ein potenzieller Abhörer dem legitimen Empfänger zu nahekommen, um beim Abhören unentdeckt zu bleiben, und die Verbindung wäre damit sicher.

Ausführungsbeispiele schaffen daher ein Verfahren zur Kontrolle ein oder mehrerer Sender und zur Sicherung einer Funkverbindung zwischen einem Sender und einem Empfänger in einem Mobilfunksystem. Das Verfahren umfasst ein Fokussieren eines Antennenstrahls mit einer oder mehreren Antennen, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist. Das Verfahren umfasst ferner ein Einfügen, auf der physikalischen Schicht, von zusätzlichen Rauschanteilen in eine Nachricht für den Empfänger, um eine geschützte Nachricht für den Empfänger zu erhalten, wobei das Einfügen der Rauschanteile auf einer oder mehreren auch dem Empfänger bekannten Zufallszahlen beruht. Darüber hinaus beinhaltet das Verfahren ein Senden der geschützten Nachricht an den Empfänger über den Antennenstrahl. Durch die zusätzlich eingefügten Rauschanteile ist eine Dekodierung der Nachricht durch einen Angreifer außerhalb der Halbwertsbreite des Antennenstrahls zumindest erschwert, idealerweise unmöglich. Die Fokussierung des Antennenstrahls sorgt dafür, dass dieser Bereich nahe beim legitimen Empfänger liegt und damit ein unentdecktes Abhören erschwert oder unmöglich gemacht wird.

Darüber hinaus kann eine Rückmeldung über eine Übertragungsqualität von dem Empfänger am Sender empfangen werden und ein Einstellen eines oder mehrerer Übertragungsparameter für das Senden der geschützten Nachricht und/oder einer Vorschrift für das Einfügen der Rauschanteile erfolgen. Damit kann ein adaptives oder dynamisches Nachführen der Übertragungsparameter und/oder des Einfügens der Rauschanteile erfolgen. Dies kann basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen auch basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

In weiteren Ausführungsbeispielen kann das Verfahren ferner ein Fokussieren mehrerer Antennenstrahlen entlang unterschiedlicher Ausbreitungspfade zu dem Empfänger und ein Senden der geschützten Nachricht an den Empfänger über die mehreren Antennenstrahlen umfassen. Dabei können die mehreren Ausbreitungspfade zur Erhöhung der Übertragungskapazität und/oder auch zur weiteren Verbesserung des Abhörschutzes genutzt werden. So kann das Verfahren in manchen Ausführungsbeispielen ein Einfügen unterschiedlicher Rauschanteile auf der physikalischen Schicht für die mehreren Antennenstrahlen umfassen, so dass die Antennenstrahlen separatem Schutz unterliegen. In einigen Ausführungsbeispielen kann das Verfahren auch ein Generieren mehrerer geschützter Nachrichten basierend auf einer Ursprungsnachricht und Senden der mehreren geschützten Nachrichten über die mehreren Antennenstrahlen und/oder über mehrere Sender an den Empfänger umfassen. Dabei kann eine Teilmenge der geschützten Nachrichten zum Rekonstruieren der Ursprungsnachricht ausreichend sein. Dadurch wird zusätzlicher Schutz gewährleistet, da mehrere räumlich getrennte (Sender oder Antennenstrahlen) Nachrichten bzw. Signale abgehört werden müssten.

Das Verfahren kann in weiteren Ausführungsbeispielen auch ein Generieren von weiteren Zufallszahlen und ein Bestimmen von ein oder mehreren kryptografischen Schlüsseln auf Basis der weiteren Zufallszahlen umfassen. Zusätzlich kann das Verfahren noch ein Sichern der kryptographischen Schlüssel als Nachricht für die Übertragung durch das Einfügen der Rauschanteile und ein Übertragen der gesicherten kryptografischen Schlüssel an ein oder mehrere weitere Sendeempfänger über die mehreren Antennenstrahlen aufweisen. Insofern kann auch ein abhörsicheres Verteilen von kryptografischen Schlüsseln durch Ausführungsbeispiele ermöglicht werden.

In Ausführungsbeispielen kann zusätzlich noch ein Verschlüsseln der Nachricht mit einem post-quantum-kryptografischen Verschlüsselungsalgorithmus erfolgen, was die Abhörsicherheit weiter erhöht.

Ausführungsbeispiele schaffen darüber hinaus ein Verfahren zur Kontrolle eines Empfängers und zur Sicherung einer Funkverbindung zwischen einem Sender und dem Empfänger in einem Mobilfunksystem. Das Verfahren umfasst ein Kommunizieren von Kontrollinformation mit dem Sender, wobei die Kontrollinformation dem Sender ermöglicht einen Antennenstrahl einer oder mehrerer Antennen zu fokussieren, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist. Das Verfahren umfasst darüber hinaus ein Empfangen einer geschützten Empfangsnachricht von dem Sender und ein Entfernen, auf der physikalischen Schicht, von zusätzlichen Rauschanteilen aus der geschützten Nachricht, um eine rauschreduzierte Nachricht zu erhalten, wobei das Entfernen auf einem oder mehreren auch dem Sender bekannten Zufallswerten beruht. Schließlich beinhaltet das Verfahren auch noch ein Dekodieren der rauschreduzierten Nachricht. Der Empfänger kann so basierend auf dem Zufallswert und einer entsprechenden Empfangsqualität die zusätzlich zugefügten Rauschanteile wieder entfernen und die Nachricht dekodieren.

In weiteren Ausführungsbeispielen kann das Verfahren ferner ein Senden einer Rückmeldung über eine Übertragungsqualität an den Sender zum Einstellen ein oder mehrerer Übertragungsparameter für das Senden der geschützten Empfangsnachricht und/oder zum Einstellen einer Vorschrift für das Entfernen der Rauschanteile umfassen. Dies kann dann basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ, kann das Einstellen auch basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern. Die Übertragungsparameter und/oder die Vorschrift für das Einfügen der Rauschanteile können so adaptiv an die Übertragungsqualität bzw. den Qualitätsunterschied zwischen legitimen Empfänger und Abhörer angepasst werden.

Das Empfangen der geschützten Empfangsnachricht kann in manchen Ausführungsbeispielen auch über unterschiedliche Ausbreitungspfade, über mehrere Antennenstrahlen des Senders oder auch von mehreren Sendern erfolgen. Dabei kann eine Mehrwegekommunikation genutzt werden, um die Abhörsicherheit und/oder die Übertragungsqualität zu erhöhen. Entsprechend können unterschiedliche Rauschanteile auf der physikalischen Schicht für die mehreren Ausbreitungspfade entfernt werden für den Fall, dass die Ausbreitungspfade individuell gesichert werden. Darüber hinaus kann auch ein Empfangen mehrerer geschützter Empfangsnachrichten, die auf einer Ursprungsnachricht basieren, über die mehreren Ausbreitungspfade und/oder von mehreren Sendern erfolgen. Das Verfahren kann ferner ein Rekonstruieren der Ursprungsnachricht basierend auf den mehreren geschützten Empfangsnachrichten umfassen. So kann die eigentliche Ursprungsnachricht aufgeteilt und die Abhörsicherheit weiter erhöht werden. Die mehreren geschützten Empfangsnachrichten können zum Rekonstruieren der Ursprungsnachricht ausreichend sein und eine Teilmenge der gesendeten Nachrichten darstellen. Insofern können Kodierungskonzepte zum Einsatz kommen, die der Ursprungsnachricht Redundanz hinzufügen, sodass nicht alle daraus resultierenden Nachrichten zur Rekonstruktion der Ursprungsnachricht notwendig sind und ein gewisser Verlust tolerierbar ist.

In einigen Ausführungsbeispielen kann das Verfahren ferner ein Fokussieren eines oder mehrerer Antennenstrahlen am Empfänger umfassen, sodass der Sender in einer Hauptabstrahlrichtung des Antennenstrahls des Empfängers liegt. Insofern kann die Empfangsqualität beim legitimen Empfänger weiter erhöht und der Unterschied zu einem etwaigen Abhörer weiter vergrößert werden. Die Ursprungsnachricht kann zumindest in manchen Ausführungsbeispielen auch ein oder mehrere kryptografische Schlüssel umfassen und so ein effektiver und sicherer Schlüsselverteilmechanismus geschaffen werden. In weiteren Ausführungsbeispielen kann das Verfahren ferner in zusätzliches Entschlüsseln der Nachricht mit einem post-quantum-kryptografischen Verschlüsselungsalgorithmus umfassen.

Ein weiteres Ausführungsbeispiel ist ein Computerprogramm mit einem Programmcode zur Durchführung eines der hierin beschriebenen Verfahren, wenn der Programmcode auf einem Computer, einem Prozessor oder einer programmierbaren Hardwarekomponente ausgeführt wird.

Eine Vorrichtung zur Kontrolle ein oder mehrerer Sender und zur Sicherung einer Funkverbindung zwischen einem Sender und einem Empfänger in einem Mobilfunksystem ist ein weiteres Ausführungsbeispiel. Die Vorrichtung umfasst ein oder mehrere Schnittstellen, die zur Kommunikation mit einem oder mehreren Senderkomponenten ausgebildet sind. Darüber hinaus umfasst die Vorrichtung ein oder mehrere Signalverarbeitungskomponenten, die ausgebildet sind, um eines der beschriebenen Verfahren zur Kontrolle ein oder mehrerer Sender auszuführen. Weitere Ausführungsbeispiele sind eine Kontrollinstanz eines Mobilfunksystems oder ein Sender für ein Mobilfunksystem mit einer solchen Vorrichtung.

Ausführungsbeispiele schaffen auch eine Vorrichtung zur Kontrolle eines Empfängers und zur Sicherung einer Funkverbindung zwischen einem Sender und dem Empfänger in einem Mobilfunksystem. Die Vorrichtung umfasst ein oder mehreren Schnittstellen, die zur Kommunikation mit einem oder mehreren Senderkomponenten ausgebildet sind und ein oder mehreren Signalverarbeitungskomponenten, die ausgebildet sind, um eines der hier beschriebenen Verfahren zur Kontrolle eines Empfängers auszuführen. Ein Empfänger für ein Mobilfunksystem mit einer solchen Vorrichtung ist ein weiteres Ausführungsbeispiel.

Schließlich schaffen Ausführungsbeispiele auch ein Mobilfunksystem mit einer Kontrollinstanz oder einem Sender und einem Empfänger wie hierin beschrieben.

**Figurenkurzbeschreibung**

Einige Beispiele von Vorrichtungen und/oder Verfahren werden nachfolgend bezugnehmend auf die beiliegenden Figuren lediglich beispielhaft näher erläutert. Es zeigen:

Fig. 1 ein Ablaufdiagramm eines Ausführungsbeispiels eines Verfahrens zur Kontrolle ein oder mehrerer Sender und zur Sicherung einer Funkverbindung zwischen einem Sender und einem Empfänger in einem Mobilfunksystem;

Fig. 2 ein Ablaufdiagramm eines Ausführungsbeispiels eines Verfahrens zur Kontrolle eines Empfängers und zur Sicherung einer Funkverbindung zwischen einem Sender und dem Empfänger in einem Mobilfunksystem;

Fig. 3 Blockdiagramme von Ausführungsbeispielen von Vorrichtungen für Sender und Empfänger in einem Mobilfunksystem;

Fig. 4 ein Blockdiagramm einer Absicherung auf der physikalischen Schicht in einem Ausführungsbeispiel;

Fig. 5 Beamforming/Strahlformung in 5G/6G Mobilfunknetzwerken mit Hilfe von Antennenarrays;

Fig. 6 eine Illustration zum Abstrahlverhalten linearer Antennenarrays mit N=16, 32 oder 64 Antennen;

Fig. 7 SNR-Quotienten für 256 Sendeantennen bei 7Ghz und 20Ghz in Abhängigkeit eines transversalen Abstandes eines Abhörers vom Beam-Maximum;

Fig. 8 SNR-Quotienten für 4096 Sendeantennen bei 7 Ghz und 20 Ghz in Abhängigkeit eines transversalen Abstandes eines Abhörers vom Beam-Maximum;

Fig. 9 Architektur und Aufbau eines modernen Mobilfunknetzwerks mit verteiltem Zugriff in einem Ausführungsbeispiel;

Fig. 10 ein Blockdiagramm von Funktionsblöcken einer 5G/6G Distributed Unit (DU);

Fig. 11 eine technische Realisierung einer 6G DU mit PLS in einem Ausführungsbeispiel;

Fig. 12 ein Ausführungsbeispiel mit einem Reflektor;

Fig. 13 die Versorgung eines mobilen Endgerätes in einem Ausführungsbeispiel.

Fig. 14 verschiedene Übertragungsmodi in Ausführungsbeispielen, und

Fig. 15 ein Übertragungsszenario mit mehreren Empfängern in einem Ausfuhrungsbeispiel.

## Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

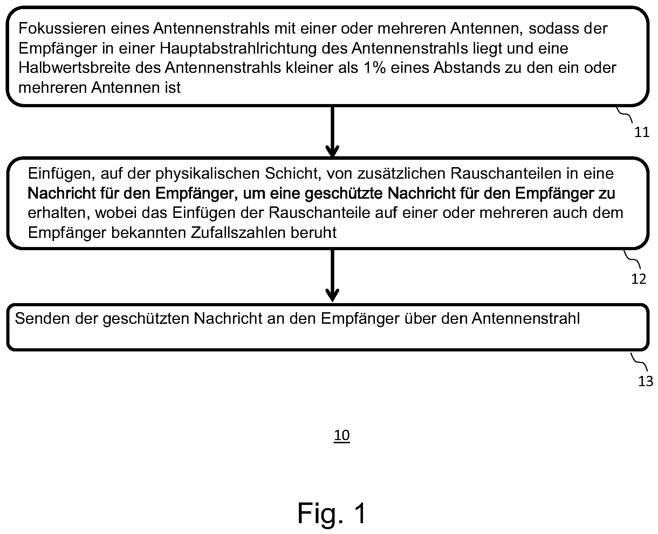

Fig. 1 zeigt ein Ablaufdiagramm eines Ausführungsbeispiels eines Verfahrens 10 zur Kontrolle ein oder mehrerer Sender und zur Sicherung einer Funkverbindung zwischen einem Sender und einem Empfänger in einem Mobilfunksystem. Das Verfahren 10 umfasst ein Fokussieren 11 eines Antennenstrahls mit einer oder mit mehreren Antennen, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist. Das Verfahren 10 umfasst darüber hinaus ein Einfügen 12, auf der physikalischen Schicht, von zusätzlichen Rauschanteilen in eine Nachricht (z.B. mit Nutz- und/oder Kontrolldaten) für den Empfänger, um eine geschützte Nachricht für den Empfänger zu erhalten, wobei das Einfügen 12 der Rauschanteile auf einer oder mehreren auch dem Empfänger bekannten Zufallszahlen beruht. Das Verfahren 10 beinhaltet auch noch ein Senden der geschützten Nachricht an den Empfänger über den Antennenstrahl.

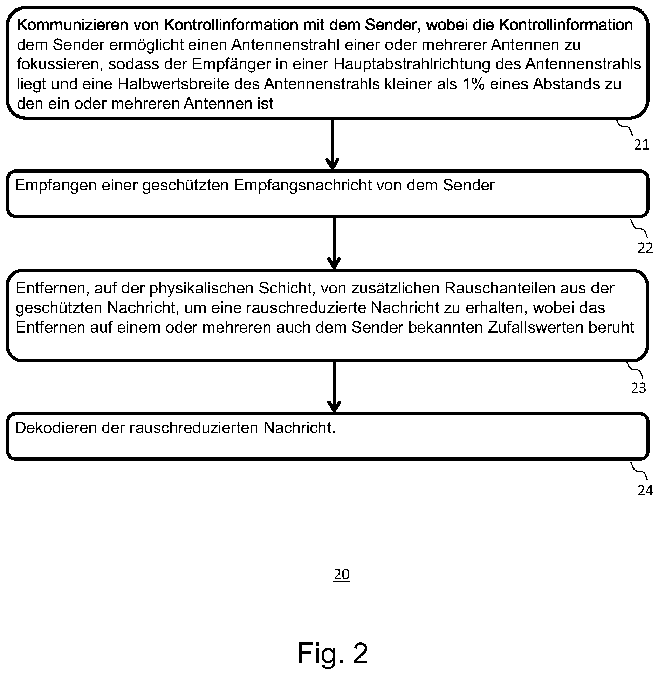

Fig. 2 illustriert ein Ablaufdiagramm eines Ausführungsbeispiels eines Verfahrens 20 zur Kontrolle eines Empfängers und zur Sicherung einer Funkverbindung zwischen einem Sender und dem Empfänger in einem Mobilfunksystem. Das Verfahren 20 umfasst ein Kommunizieren 21 von Kontrollinformation (und Nutzdaten) mit dem Sender, wobei die Kontrollinformation dem Sender ermöglicht einen Antennenstrahl einer oder mehrerer Antennen zu fokussieren, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist. Das Verfahren 20 umfasst darüber hinaus ein Empfangen 22 einer geschützten Empfangsnachricht (z.B. mit Nutz- und/oder Kontrolldaten) von dem Sender und ein Entfernen 23, auf der physikalischen Schicht, von zusätzlichen Rauschanteilen aus der geschützten Nachricht, um eine rauschreduzierte Nachricht zu erhalten, wobei das Entfernen auf einem oder mehreren auch dem Sender bekannten Zufallswerten beruht. Das Verfahren umfasst darüber hinaus ein Dekodieren 24 der rauschreduzierten Nachricht.

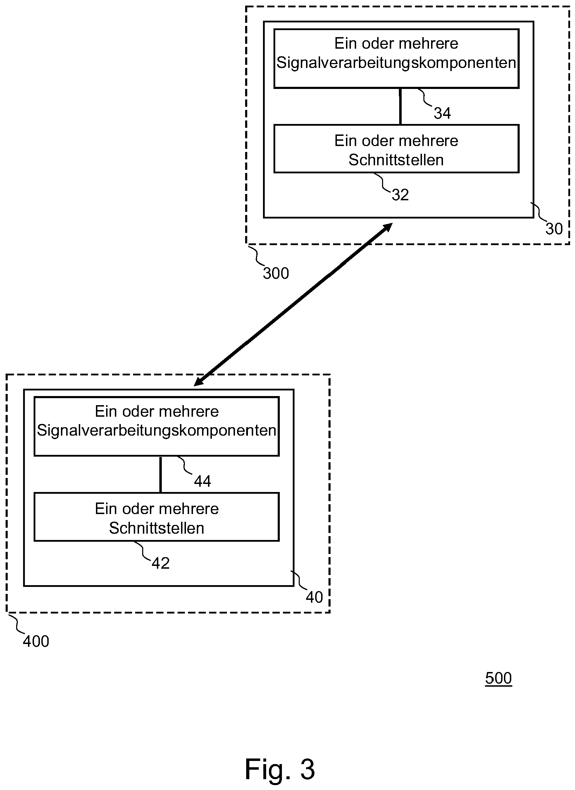

Optionale Komponenten werden im Folgenden mit gestrichelten Linien dargestellt. Fig. 3 zeigt Blockdiagramme von Ausführungsbeispielen von Vorrichtungen 30, 40 für Sender 300 und Empfänger 400 in einem Mobilfunksystem 500. Die Vorrichtung 30 zur Kontrolle ein oder mehrerer Sender 300 und zur Sicherung einer Funkverbindung zwischen dem Sender 300 und dem Empfänger 400 in dem Mobilfunksystem 500 umfasst ein oder mehreren Schnittstellen 32, die zur Kommunikation mit einem oder mehreren Senderkomponenten ausgebildet sind und die mit ein oder mehreren Signalverarbeitungskomponenten 34 gekoppelt sind. Die ein oder mehreren Signalverarbeitungskomponenten 34 sind ausgebildet, um eines der Verfahren 10 zur Kontrolle eines oder mehrerer Sender 300 auszuführen. Die Fig 3 illustriert darüber hinaus auch ein Ausführungsbeispiel einer Kontrollinstanz 300 oder eines Senders 300 (in gestrichelten Linien da optional aus Sicht der Vorrichtung 30) des Mobilfunksystems 500 mit einer Vorrichtung 30. Die Vorrichtung 30 kann demnach auch vom eigentlichen Sender entfernt in einer entsprechenden Kontrollinstanz implementiert sein, die an anderer Stelle des Mobilfunksystems 500 angeordnet ist und die auch mehrere Sender kontrollieren kann.

Fig. 3 zeigt auch ein Ausführungsbeispiel einer Vorrichtung 40 zur Kontrolle eines Empfängers 400 und zur Sicherung einer Funkverbindung zwischen einem Sender 300 und dem Empfänger 400 in einem Mobilfunksystem 500. Die Vorrichtung 40 umfasst ein oder mehrere Schnittstellen 42, die zur Kommunikation mit ein oder mehreren Empfängerkomponenten ausgebildet sind und die mit ein oder mehreren Signalverarbeitungskomponenten 44 gekoppelt sind. Die ein oder mehreren Signalverarbeitungskomponenten 44 sind ausgebildet, um eines der hierin beschriebenen Verfahren 20 zur Kontrolle eines Empfängers 400 auszuführen. Fig. 3 zeigt auch einen Empfänger 400 (optional aus Sicht der Vorrichtung) für das Mobilfunksystem 500 mit einer Vorrichtung 40.

Schließlich zeigt die Fig. 3 auch noch ein Ausführungsbeispiel eines Mobilfunksystems mit einer Kontrollinstanz 300 oder einem Sender 300 und einem Empfänger 400.

Die für die Vorrichtungen 30, 40 beschriebenen Schnittstellen 32, 42 erlauben eine Kommunikation mit Senderzw. Empfängerkomponenten. Die Schnittstellen 32, 42 können somit Anschlüsse, Pins oder Register sein, die einen Austausch von Daten mit den jeweiligen Komponenten erlauben. In dem Mobilfunksystem 500 werden elektromagnetische Wellen im Radiofrequenzbereich verwendet, um Daten zwischen zwei oder mehr Punkten (Vom Sender zum Empfänger) drahtlos zu übertragen. Dabei können entsprechende Funkstandards, wie sie beispielsweise durch 3GPP (3rd Generation Partnership Project) vorgeschlagen und entwickelt werden, zum Einsatz kommen. Insofern können Sender- und Empfängerkomponenten typische Komponenten eines Sendeempfängers für Radiosignale umfassen, wie beispielsweise ein oder mehrere Antennen, Verstärker, Filter, Signalverarbeitungskomponenten etc. insbesondere auf die Antennentechnik wird im Folgenden noch im Detail eingegangen. Typische weitere Sender- bzw. Empfängerkomponenten sind darüber hinaus ein oder mehrere Mischer, ein oder mehrere Verstärker, ein oder mehrere Diplexer, ein oder mehrere Duplexer, Funkmodem, optische und/oder elektronische Signalverarbeitungskomponenten, usw. In Ausführungsbeispielen können die entsprechenden Signalverarbeitungskomponenten 34, 44 einem beliebigen Controller oder Prozessor oder einer programmierbaren Hardwarekomponente entsprechen. Beispielsweise können Kontrollmodule (Vorrichtungen 30, 40) auch als Software oder Computerprogramm realisiert sein, die oder das für eine entsprechende Hardwarekomponente programmiert ist.

In Ausführungsbeispielen kann das Mobilfunksystem 500 oder Mobilkommunikationssystem 500 beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), Systeme der fünften Generation (5G), 6G oder auch Mobilfunksysteme anderer Standards, wie z. B. Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

In Ausführungsbeispielen können die ein oder mehreren Signalverarbeitungskomponenten 34, 44 zur digitalen Signalverarbeitung ausgebildet sein. Dabei können sie als eine oder mehrere Verarbeitungseinheiten, ein oder mehrere Verarbeitungsgeräte, ein beliebiges Mittel zur Verarbeitung, ein beliebiges Mittel zur Bestimmung, ein beliebiges Mittel zur Berechnung, wie einem Prozessor, einem Computer oder einer programmierbaren Hardwarekomponente, die mit entsprechend angepasster Software betrieben werden kann, implementiert werden. Beispielsweise können die ein oder mehreren Signalverarbeitungskomponenten auch Speicher umfassen, die entsprechende Information über die Signale zwischenspeichern bzw. Konfigurationsinformation vorhalten. Die beschriebene Funktion der ein oder mehreren Signalverarbeitungskomponenten 34, 44 kann auch in Software implementiert sein, die dann auf einer oder mehreren programmierbaren Hardwarekomponenten ausgeführt wird. Solche Hardwarekomponenten können einen Universalprozessor, einen digitalen Signalprozessor (DSP), einen Mikrocontroller usw. umfassen. Auch solche Signalverarbeitungskomponenten verwendet werden, um die zusätzlichen Rauschanteile auf der physikalischen Schicht einzufügen bzw. zu entfernen.

Ausführungsbeispiele können so beispielsweise ein Verfahren zur Absicherung verrauschter "6G MIMO" Kommunikationskanäle bereitstellen. Zur Sicherung der Kommunikationsstrecken kristallisieren sich zwei Technologien heraus:

- Quantensichere Kryptographie: neue Verschlüsselungsalgorithmen versprechen Sicherheit gegenüber jeglichen Angriffen, sei es von Quantencomputern oder sonstigen algorithmischen oder technischen Innovationen. Dieses Feld umschließt quantensichere asynchrone Kryptographie (PQC, Post Quantum Cryptography) bzw. den quantensicheren Schlüsselaustausch (QKD, Quantum Key Distribution) mit nachfolgender sicherer synchroner Kryptographie.
- Physical Layer Security (PLS): die Veränderung der physikalischen Signale auf dem analogen Kommunikationskanal, so dass nur legitime Empfänger in der Lage sind, Information aus der Übertragung zu dekodieren. PLS-Lösungen können in Ausführungsbeispielen als modulare Schemata vorliegen, die vor Versendung zusätzliches Rauschen in die physikalische Übertragung einfügen. Die Stärke des Rauschens kann dabei derart eingestellt werden, dass der rechtmäßige Empfänger diese Störung kompensieren bzw. korrigieren kann, ein potenzieller Angreifer aber nicht.

Manche Ausführungsbeispiele stellen eine Methode bereit, die mit Hilfe der "Physical Layer Security" (PLS) eine informationstheoretisch sichere Verschlüsselung der übertragenen Daten über 5G/6G-MIMO-Netzwerke realisiert. PLS gilt als informationstheoretisch sicher, vgl. M. Bloch, M. Hayashi and A. Thangaraj, "Error-control coding for physical-layer secrecy," Proc. IEEE, vol. 103, no. 10, pp. 1725-1746, 2015, solange der gewollte Empfänger ein besseres Signal-zu-Rausch (S/R) Verhältnis (auch engl. Signal-to-Noise Ration, SNR) hat als der mögliche Angreifer.

Die Realisierung der PLS-Methode wird als modulare Operation auf den digitalen Datenstrom angewendet, bevor dieser in das Sendegerät geschickt wird. Die Sicherheit wird durch einen Sicherheitscode realisiert, der über ein mathematisches Verfahren, welches die Nachricht mit einer Folge von Zufallszahlen kodiert, die beim Sender und Empfänger zugleich verteilt wurden. Das Sendegerät übernimmt dann den Versand der Nachricht. Auf der Empfängerseite läuft der Prozess in Gegenrichtung ab. Das Verfahren verläuft analog zu den in EP22209986 beschriebenen Verfahren für Next-Generation-Mobilfunk und WiFi Verbindungen. Der Inhalt der EP22209986 wird in die vorliegende Offenbarung durch Verweis mit aufgenommen.

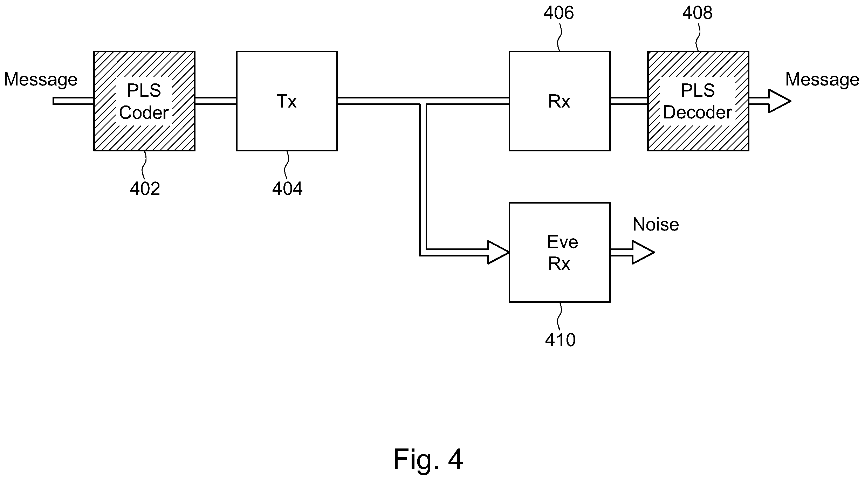

Fig. 4 zeigt ein Blockdiagramm einer Absicherung auf der physikalischen Schicht in einem Ausführungsbeispiel. Fig. 4 zeigt die Abfolge der Prozessschritte. Der PLS Encoder 402 erzeugt aus einer Nachricht m einen PLS Code c, indem die Nachricht m mit einer Folge von Zufallszahlen r verarbeitet wird, so dass $c = f^{-1}(m, r)$. In der Abbildung $m \rightarrow f\{-1\}(m,r)$ steckt auch Zufall, welchen allerdings nur der Sender benötigt. Denn der Sender wählt aus allen möglichen Elementen x, so dass $f(x,r)=m$, zufällig ein x aus. Die Nachricht wird dann über die Sendeeinheit 404 und den Empfänger geschickt, wo die Nachricht zunächst von der Empfangseinheit 406 empfangen wird. Der Decoder 408 ist wieder in der Lage die Nachricht m über $m = f(c,r)$ zu berechnen. Die Besonderheit ist, dass ein ungewollter Empfänger Eve 410 nicht in der Lage ist, die Nachricht m zu bestimmen. Die Details des mathematischen Verfahrens werden in EP22209986 im Detail beschrieben und hier mit aufgenommen.

Die Fig. 4 zeigt eine Darstellung der "Physical Layer Encodings" nach EP22209986. Die Sende- (Tx 504) und Empfangseinheiten (Rx 506) sind die Endpunkte eines verrauschten Kommunikationskanals.

Die Anwendung des PLS-Verfahrens durch einen modularen Rechner vor der Sendeeinheit (Coding 502) und nach der Empfangseinheit (Decoding 508) erzeugen ein Signal, welches durch den bestimmten Empfänger dekodierbar ist, ein ungewollter Empfänger (Eve 510) aber nur Rauschen messen kann.

Das Verfahren 10 zur Kontrolle des Senders kann in weiteren Ausführungsbeispielen ferner ein Empfangen einer Rückmeldung über eine Übertragungsqualität von dem Empfänger umfassen. Das Verfahren kann dann ein Einstellen eines oder mehrerer Übertragungsparameter für das Senden der geschützten Nachricht und/oder ein Einstellen einer Vorschrift für das Einfügen der Rauschanteile umfassen. Es kann demnach für die Funkverbindung zwischen Sender und Empfänger eine Regelung oder Steuerung implementiert sein, die die Übertragungsparameter, beispielsweise eine Coderate, Modulation, Sendeleistung, usw. an aktuelle Gegebenheiten anpasst. Typischerweise geschieht dies anhand von Messungen/Schätzungen am Empfänger, die ein Maß für die Übertragungsqualität darstellen, so kommen beispielsweise Bitfehlerraten, wie Bit Error Rate, Block Error Rate (BER), Frame Error-Rate (FER), usw. in Frage oder auch Bitenergie bezogen auf die Rauschleistungsdichte (Eb/N0), Signal-zu Interferenz Verhältnis, Signal-zu Rausch Verhältnis (SNR) oder Signal-zu-Rausch-und-Interferenz Verhältnis in Frage (SINR), usw. die auch miteinander zusammenhängen. Typischerweise erfordert eine erfolgreiche Übertragung eine gewisse Übertragungsqualität, die beim Empfänger bestimmt wird und dann über Rückmeldung an den Sender nachgeführt wird.

In gleicher Weise kann das Einfügen der Rauschanteile an die Übertragung angepasst werden. Wie bereits oben erläutert, kann die Abhörsicherheit dann gewährleistet werden, wenn die Signalqualität (z.B. SNR, SIR, SINR, Eb/N0 usw.) bei einem potentiellen Abhörer zur Signalqualität beim legitimen Empfänger schlechter ist. Beispielsweise stehen diese in einem gewissen Verhältnis und sind bestimmend für einen Anteil des zur Absicherung notwendigen Rauschanteils. So können die Übertragungsparameter eingestellt werden, basierend auf der Übertragungsqualität und basierend auf einem zur Absicherung der Funkverbindung notwendigen Signalqualitätsunterschied für einen Abhörer relativ zu einer Signalqualität beim legitimen Empfänger und/oder basierend auf der Übertragungsqualität und basierend auf einem geschätzten Signalqualitätsunterschied für einen Abhörer relativ zu einer Signalqualität beim legitimen Empfänger, um die Nachricht vor einem Abhören zu sichern. Nachdem der Signalqualitätsunterschied beim Abhörer nicht gemessen werden kann, wird dieser beispielsweise dadurch geschätzt, dass man einen Mindestabstand zwischen legitimen Empfänger und Abhörer annimmt, bzw. Annahmen in Bezug auf die Empfangsapertur, die Qualität der Empfangskomponenten und das Rauschen beim Abhörer macht. Daraus ergibt sich mit den bekannten Ausbreitungsverhältnis auch eine Annahme oder Schätzung für eine empfangbare Energie/Leistung des Nutzsignals bei Abhörer, worauf sich eine Schätzung der Signalqualität bei Abhörer stützen lässt, zumindest jedoch ein Signalqualitätsunterschied zwischen Abhörer und legitimen Empfänger.

Demnach kann auf der Senderseite das Einstellen eines oder mehrerer Übertragungsparameter für das Senden der geschützten Nachricht und/oder das Einstellen einer Vorschrift für das Einfügen der Rauschanteile basierend auf der Übertragungsqualität und basierend auf einem zur Absicherung der Funkverbindung notwendigen Signalqualitätsunterschied für einen Abhörer relativ zu einer Signalqualität beim legitimen Empfänger erfolgen. Ergänzend oder alternativ kann das Einstellen der Übertragungsparameter und/oder der Vorschrift basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Analog kann das Verfahren 20 zur Kontrolle des Empfängers 400 ein Senden einer Rückmeldung über eine Übertragungsqualität an den Sender zum Einstellen ein oder mehrerer Übertragungsparameter für das Senden der geschützten Empfangsnachricht und/oder Einstellen einer Vorschrift für das Entfernen der Rauschanteile umfassen. Wie oben bereits erläutert kann das Einstellen basierend auf der Übertragungsqualität und basierend auf einem zur Absicherung der Funkverbindung notwendigen Signalqualitätsunterschied für einen Abhörer relativ zu einer Signalqualität beim legitimen Empfänger, und/oder basierend auf der Übertragungsqualität und basierend auf einem geschätzten Signalqualitätsunterschied für einen Abhörer relativ zu einer Signalqualität beim legitimen Empfänger erfolgen, um die Nachricht vor einem Abhören zu sichern.

Die zusätzlich eingefügten Rauschanteile können ferner auf einem oder mehreren Zufallswerten basieren, die dem Sender und dem Empfänger bekannt sind. Diese Zufallswerte werden auch als "Seed" bezeichnet und können so Eingangswerte für eine Funktion darstellen, die dann ein oder mehrere weitere Zufallswerte generiert. Dabei sind bezüglich der Verteilung der Zufallswerte verschiedene Szenarien möglich, beispielsweise können die Zufallswerte ein gemeinsames Geheimnis des Senders und Empfängers darstellen oder sie können auch öffentlich bekannt sein. Weitere Details finden sich in EP 22209986, EP 23196965 und EP 24174614 deren Inhalte hierin durch Verweis inkludiert sind.

Die Sicherheit der Methode hängt von den physikalischen Eigenschaften des Kommunikationsverfahrens und den daraus resultierenden Rauschverhältnissen an unterschiedlichen Empfängern ab. Letztendlich muss bewiesen werden, unter welchen Kriterien ein potentieller Angreifer ein besseres Signal-zu-Rausch (S/R, SNR) Verhältnis erlangen kann als der rechtmäßige Empfänger der Nachricht, um die Sicherheit des PLS-Verfahrens für die Mobilkommunikation bewerten zu können. Das S/R, SNR ist dabei als Beispiel zur Bewertung der Signalqualität zu verstehen. Ergänzend oder alternativ können auch andere Signalqualitätsmaße betrachtet werden, wie beispielsweise SIR, SINR, Eb/N0 usw. Welches dieser Qualitätsmaße im jeweiligen System verwendet wird, hängt von der Systemplanung und den Systemparametern ab, beispielsweise sind Systeme bekannt, die durch die vom System selbst generierte Interferenz begrenzt sind und nicht durch thermisches Rauschen.

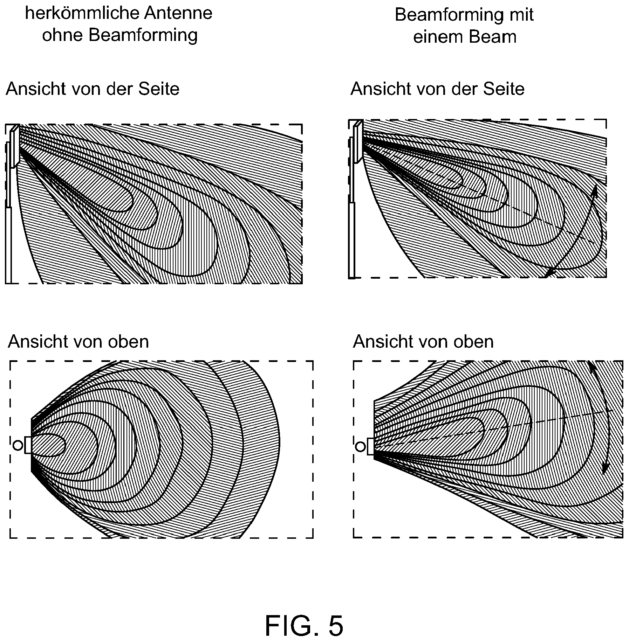

Im Folgenden wird die Propagation von MIMO GHz/THz-Mobilfunk betrachtet. Gerichteter Mobilfunk im GHz- und THz-Bereich lässt sich mit Hilfe von Antennenkonstellationen und Phasenkopplung erreichen. Um die transversale räumliche Ausdehnung einer Mobilfunk-MIMO Keule, so wie sie in Fig. 5 dargestellt wird, zu berechnen. Fig. 5 zeigt Beamforming/Strahlformung in 5G/6G Mobilfunknetzwerken mit Hilfe von Antennenarrays.

Fig. 5 zeigt links die Energieverteilung einer herkömmlichen Antenne ohne Beamforming, oben in eine Ansicht von der Seite (Strahl ist von einem Funkturm nach unten gerichtet) und unten in einer Ansicht von oben. Auf der rechten Seite der Fig. 5 sind die gleichen Ansichten mit Beamforming dargestellt (oben Seitenansicht, unten Draufsicht). Es ist deutlich zu erkennen, wie die abgestrahlte Energie durch die Strahlformung auf einen relevanten Bereich fokussiert werden kann. Weitere Details können hier: https://www.ssk.de/SharedDocs/Beratungsergebnisse/DE/2021/2021-12-10_Stgn_5G_Mobilfunk.pdf?_blob=publicationFile&v=4 eingesehen werden.

Nimmt man im einfachsten Fall ein lineares Array von einzelnen Sendeantennen an, kann man die transversale Dimension einer MIMO/Beamforming-Strahlungskeule berechnen. Im Fernfeld der MIMO-Antenne (Antennenfeld) überlagern sich elektromagnetischen Wellen phasengerecht (d.h. kohärent) und geben ihre Energie an einen Empfänger ab. Haben dabei die Antennen eines linearen Arrays den Abstand d, so erzeugen sie unter dem Winkel $\theta$ einen Gangunterschied von $d \sin \theta$ unter benachbarten Sendeantennen. Der Phasenunterschied beträgt $\Delta \phi = 2\pi d \sin \theta / \lambda$, wobei $\lambda$ die Wellenlänge ist. Die maximale Auflösung der Phase beträgt $\frac{2\pi}{N}$, wobei N die Anzahl der Antennenelemente ist. Die Winkelauflösung $\Delta \theta$ wird gefunden, indem man zwei

$$\varphi_1 = 2\pi d \sin \theta / \lambda$$

und

$$\varphi_2 = 2\pi d \sin(\theta + \Delta\theta) / \lambda$$

betrachtet und deren Differenz

$$\varphi_2 - \varphi_1 = \frac{2\pi}{N} = 2\pi d \sin(\theta + \Delta\theta) / \lambda - 2\pi d \sin \theta / \lambda$$

nach $\Delta\theta$ auflöst. Nähern wir die Sinusfunktion als Taylorreihe an, so erhalten wir $\Delta\theta = \frac{\lambda}{Nd}$. Wird der Abstand d nun mit der Wellenlänge gleichgesetzt, d.h. $d = \frac{\lambda}{2}$, so beträgt die Winkelauflösung einer MIMO-Keule in Radian (FWHM, engl. Full Width at Half Maximum, Halbwertsbreite des Antennenstrahls):

$$\Delta\theta_{Mimo} = \frac{2}{N}.$$

Die folgende Tabelle zeigt die Winkelauflösung und die damit einhergehende abgedeckte Fläche auf dem Empfänger (r = 1 km tan 1/N) in Abhängigkeit der Anzahl der Sender eines linearen Antennenarrays:

| Anzahl der Antennen | Winkelauflösung [rad] | Abdeckungsradius in 1000m [m] | Abdeckungsradius in 100m [m] |
|---|---|---|---|
| 10 | 0,2 | 100 | 10 |
| 100 | 0,02 | 10 | 1 |
| 256 [5G Standard] | 0,0078 | 3,9 | 0,39 |
| 1024 [5] | 0,00195 | 0,97 | 0,097 |
| 4096 | 0,00049 | 0,24 | 0,024 |

Es lassen sich also mit einer ausreichend großen Anzahl von korrelierten Sendeantennen sehr dünn kollimierte Funkstrahlen, sogenannte "Pencil Beams" erzeugen, die einen Verbraucher mit einem Mobilfunkkanal versorgen können. Dabei können transversale Abdeckungen von < 10cm (FWHM) in Abständen von 100m Realität werden. Anschaulich betrachtet kann somit ein mobiles Endgerät, eine Sende- und Empfangseinheit eines Fahrzeugs, eine Drohne oder ein Sensor direkt und alleinig von einem 6G Sendemasten versorgt werden.

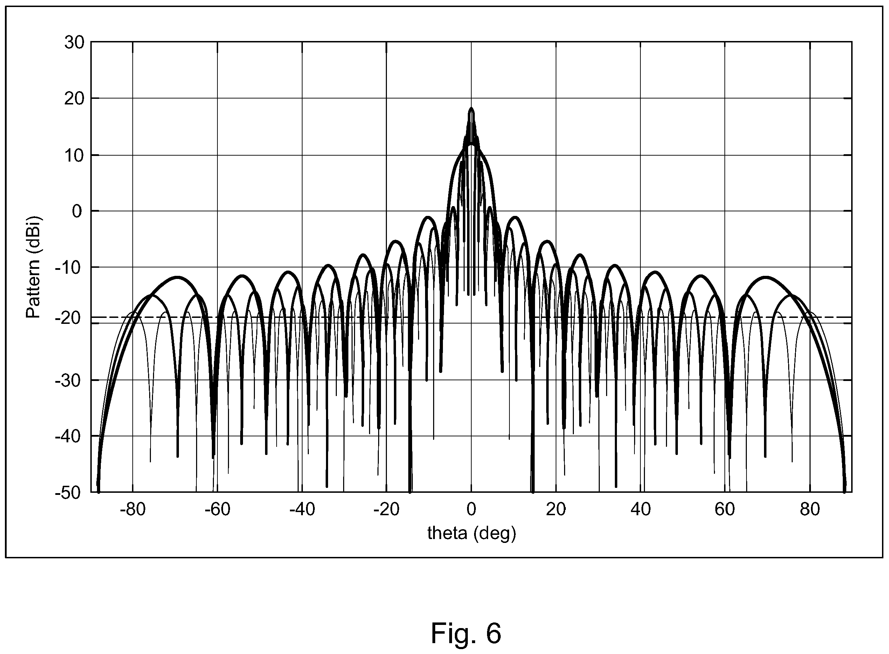

Detailllierter betrachtet hat der ausgesendete "pencil beam" eine transversale Ausdehnung, wie in Fig. 6 gezeigt. Fig. 6 ist eine Illustration zum Abstrahlverhalten linearer Antennenarrays mit N=16 (gröbster Verlauf), 32 (mittlerer Verlauf) oder 64 (feinster Verlauf) Antennen. Der Winkel Theta in Grad ist auf der Abszisse aufgetragen und der Antennengewinn in dBi (in dB im Vergleich zu einem isotropen Strahler) auf der Ordinate. Es ist zu erkennen, dass mit steigender Anzahl der Antennenelemente der Gewinn in der Hauptrichtung (0 Grad) steigt und die Breite der Hauptkeule abnimmt. Gleichzeitig fällt mit steigender Anzahl der Antennenelemente der Gewinn der Nebenmaxima. Weitere Details zum Abstrahlverhalten linearer Antennenarrays mit N=16, 32 oder 64 Antennen finden sich in der Zeitschrift HF-Praxis aus dem November 2019.

Die Nebenmaxima, die in Fig. 6 zu erkennen sind, sind in Ihrer Leistung 20-30dB geringer als das zentrale Maximum. Der PLS-Sicherheitscode sollte in der Lage sein, die schwächeren Signale zu sichern, während das Signal für einen Empfänger innerhalb des zentralen Maximums dekodierbar bleibt. Insofern ist können die Vorrichtungen 30, 40 beispielsweise ausgebildet, um einen Antennenstrahl mit einer oder mehreren Antennen zu formen, dessen Halbwertsbreite kleiner als 0,1%, 1% , 2%, der 5% eines Abstands zu den ein oder mehreren Antennen ist. Die Vorrichtungen 30, 40 können ferner Antennenfelder mit mehr als 1000, 2000, 3000 oder mehr Antennenelementen aufweisen. Dabei können Kontrollroutinen zum Einsatz kommen, die eine Ausrichtung der Beams erlauben. Beispielsweise kann über einen Kontrollkanal mitgeteilt werden wie die Empfangsstärke (z.B. Empfangsleistung) gerade ist und so eine Nachregelung der Ausrichtung eines Beams erwirkt werden.

In der weiteren Diskussion von Ausführungsbeispielen wird gezeigt werden, dass PLS als Verfahren und technische Realisierung in der Lage ist, die "Pencil Beams" eines 6G Mobilfunknetzwerks geeignet gegenüber Angriffen zu schützen. Dazu wird nunmehr das Signal-zu-Rauschverhältnis (S/R, SNR) als Beispiel für eine Qualitätsmaß betrachtet.

Da die Sicherheit des PLS-Verfahrens und die Konfiguration des Sicherheitscodes auf dem bestmöglichen Signal-zu-Rausch Verhältnis, das ein Angreifer erlangen kann, beruht, müssen die S/N Werte abgeschätzt werden.

Das Signal-zu-Rausch Verhältnis wird in https://www.researchgate.net/publication/252502511_Large-Arrav Signal Processing for Deep-Space_Applications/link/540f2f410cf2f2b29a3dd678/download für lineare Empfängerantennen (Arrays) berechnet. Bei vernachlässigbarer Interferenz des Nutzsignals mit einem Störsignals aus derselben Richtung (z.B. ein Jammer/Störer hinter der Basisstation) lässt sich das SNR eines Antennenarrays als

$$SNR = \frac{NE[|S(t)|^2]}{\sigma_n^2},$$

wobei $E[|S(t)|^2]$ den zeitlich gemittelten Erwartungswert der empfangenen Intensität an einem Detektor, N die Anzahl der Empfangsantennen und $\sigma_n^2$ die Varianz des Gauß'schen Rauschen eines Empfängers beschreibt. Das SNR wächst also proportional mit der Anzahl der Empfangsantennen. Das Verfahren 20 auf der Empfängerseite kann daher ein Fokussieren eines oder mehrerer Antennenstrahlen am Empfänger umfassen, sodass auch der Sender in einer Hauptabstrahlrichtung des Antennenstrahls des Empfängers liegt.

Im Falle eines starken Jammers, der in Signalrichtung stört (z.B. indem er sich vor oder hinter der Basisstation aufhält), wird jedoch nur ein von N unabhängiges SNR erzeugt

$$SNR = \frac{E[|S(t)|^2]}{\sigma_b^2},$$

wobei $\sigma_b^2$ die Varianz des Gauß'schen Rauschen des Jammers beschreibt. Der Vorteil des Antennenarrays, d.h. die Skalierung des SNRs mit N, verschwindet. Ein Jammer wäre z.B. ein anderes Objekt, z.B. ein Zeppelin, ein Wetterballon oder ein Spionagesatellit, der über sich über der Basisstation befindet und mit seinen Signalen die RF-Kommunikation von der Basisstation in ihr Versorgungsgebiet stört.

Die Rauschanteile beider Signale $\sigma_b^2$ bzw. $\sigma_n^2$ sind eine analoge Beschreibung des thermischen Rauschens, die bei den Laserstrahlen (EP 24174614.8) durch die effektive Systemtemperatur $T_{sys}$ ausgedrückt wurde. Die Temperaturen kürzen sich in den relevanten Szenarien heraus, so dass das Verhältnis der SNRs eines Angreifers zu den rechtmäßigen Empfängern unabhängig von den Rauschwerten ist.

Andere Antennen-Geometrien, z.B. kreisförmige oder rechteckige Antennen, lassen sich über Korrekturfaktoren entsprechend behandeln.

Das Verhältnis des SNR eines Angreifers zum SNR des gewollten Empfängers hängt demnach von dem Verhältnis der Anzahl der phasengekoppelten Antennen zwischen Angreifer und rechtmäßigem Empfänger ab, sofern kein interferierendes Signal (Jammer) gesendet wird.

$$\frac{SNR_A}{SNR_E} = \frac{N_A}{N_E} \frac{E[|S(t)|^2]_A}{E[|S(t)|^2]_E}$$

oder

$$\frac{SNR_A}{SNR_E} = \frac{N_A}{N_E} \frac{R_E^2}{R_A^2} C$$

Da der Erwartungswert der Intensität mit dem Quadrat der Entfernung innerhalb des Raumwinkels abnimmt. C beschreibt einen Korrekturfaktor, falls das zentrale Maximum der Strahlungskeule (Halbwertsbreite) die Dimension der Empfangsantenne übersteigt.

Im Folgenden werden Angriffsszenarien auf eine GHz MIMO Kommunikationsstrecke betrachtet. Ein Angriffsszenario ergibt sich durch einen sich transversal annähernden Angreifer. In diesem Angriffsscenario wird angenommen, dass der rechtmäßige Empfänger, z.B. ein Fahrzeug, mit einem "Pencil Beam" des 6G Mobilfunknetzwerks versorgt wird, und sich ein Angreifer von der Seite nähert. In der Simulation werden die folgenden Werte angenommen:

- Abstand Fahrzeug vom Sendemast: 100m.
- Frequenz Mobilfunk: 7 GHz und 20 GHz.
- Massive MIMO: 256 Antennen (5G Standard), 4096 Antennen (6G Aussicht).
- Annahme: Empfänger des Angreifers und des rechtmäßigen Empfängers sind identisch.
- Frage: maximal zulässige Annäherung eines Angreifers?

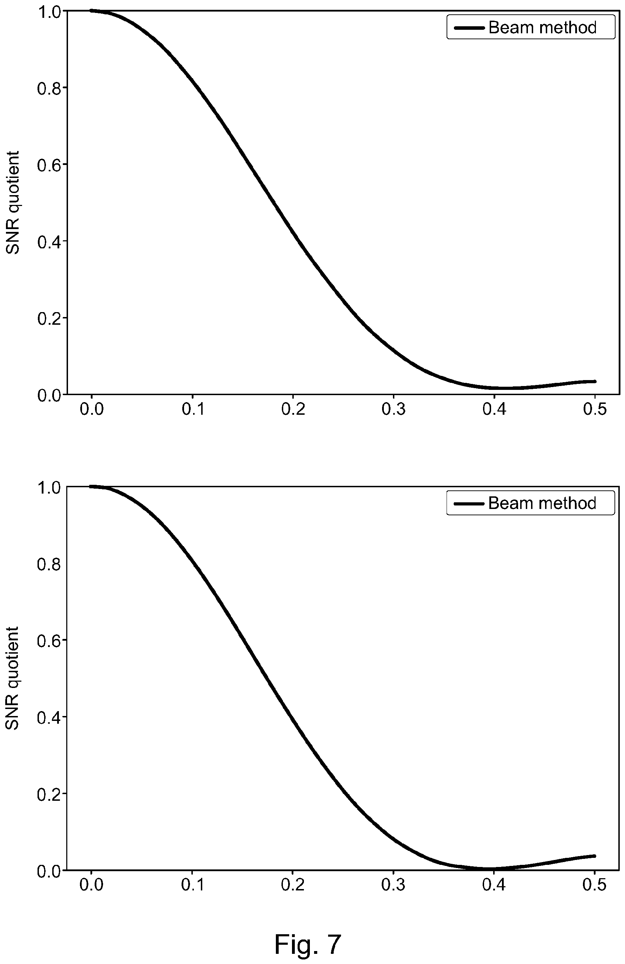

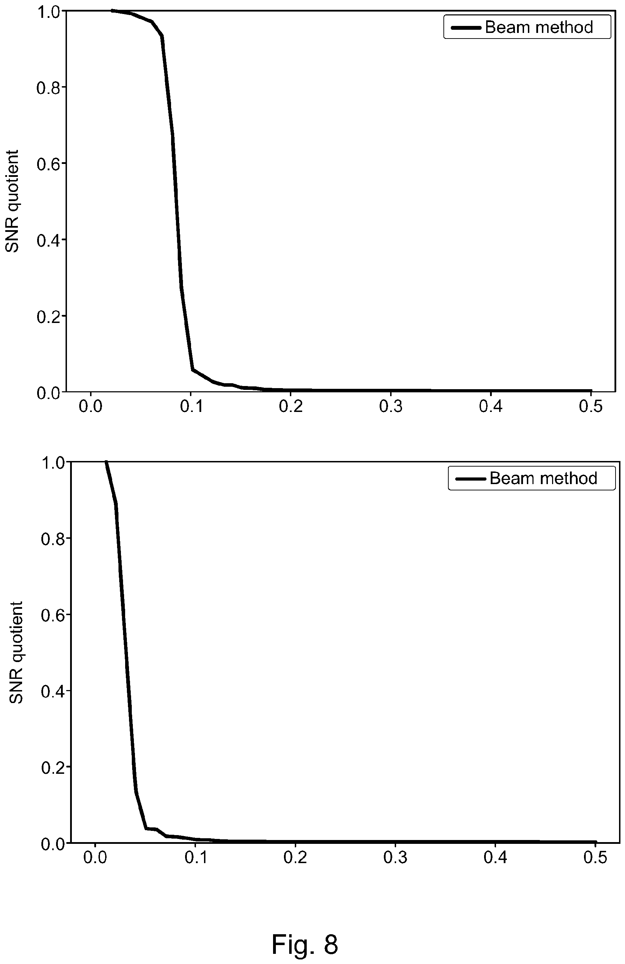

Fig. 7 zeigt den SNR-Quotienten (Ordinate) für 256 Sendeantennen bei 7Ghz (oben) und 20Ghz (unten) in Abhängigkeit eines transversalen Abstandes eines Abhörers vom Beam-Maximum in m (Abszisse). Dabei wird von einem Antennenfeld mit 0,17m Seitenlänge bei 7GHz und 64 Antennen beim Abhörer sowie von 0,06m Seitenlänge bei 20GHz und 64 Antennen beim Abhörer ausgegangen. Fig. 8 zeigt SNR-Quotienten (Ordinate) für 4096 Sendeantennen bei 7Ghz (oben) und 20Ghz (unten) in Abhängigkeit eines transversalen Abstandes eines Abhörers vom Beam-Maximum in m (Abszisse). In allen 4 Darstellungen der Fign. 7 und 8 wurde von einem Abstand eines Abhörers vom Sender von 100m ausgegangen.

In den Simulationen wird eine effektive Antennenfläche verwendet, die der geometrischen Antennenfläche entspricht. In der Realität kann die effektive Antennenfläche kleiner sein als die geometrische Antennenfläche. Simulationen haben ergeben, dass die Resultate nur wenig von der absoluten effektiven Antennenfläche abhängen, sondern hauptsächlich von dem Verhältnis der Flächen von Angreifer und legitimen Empfänger.

Fazit:

Der Angreifer muss sich bei der Verwendung von 256 Antennen auf 40 cm (7 GHz und 20 GHz, ungefährer Nulldurchgang in Fig. 7) und bei der Verwendung von 4096 Antennen beim Sender auf 10 cm (7 GHz, ungefährer Nulldurchgang in Fig. 8 oben) bzw. 5 cm (20 GHz, ungefährer Nulldurchgang in Fig. 8 unten) annähern können. PLS ist somit in der Lage, die Kommunikation zwischen Mobilfunk-Basisstation und Fahrzeugen, IoT Devices oder Drohnen semantisch zu sichern.

Im 6G Fall müsste der Angreifer also bis auf 10cm an den Empfänger aufschließen. Es ließe sich somit eine sichere und direkte Verbindung zwischen 6G Basisstation und der Antenne der Telemetrie Einheit eines Fahrzeuges realisieren. Auch lässt sich ein Angriff einer Spionageantenne, die an der Kleidung eines Opfers befestigt wird, um die Kommunikation mit dem Endgerät mitzuschneiden, bei 5G / 6G MIMO-Szenarien ausschließen.

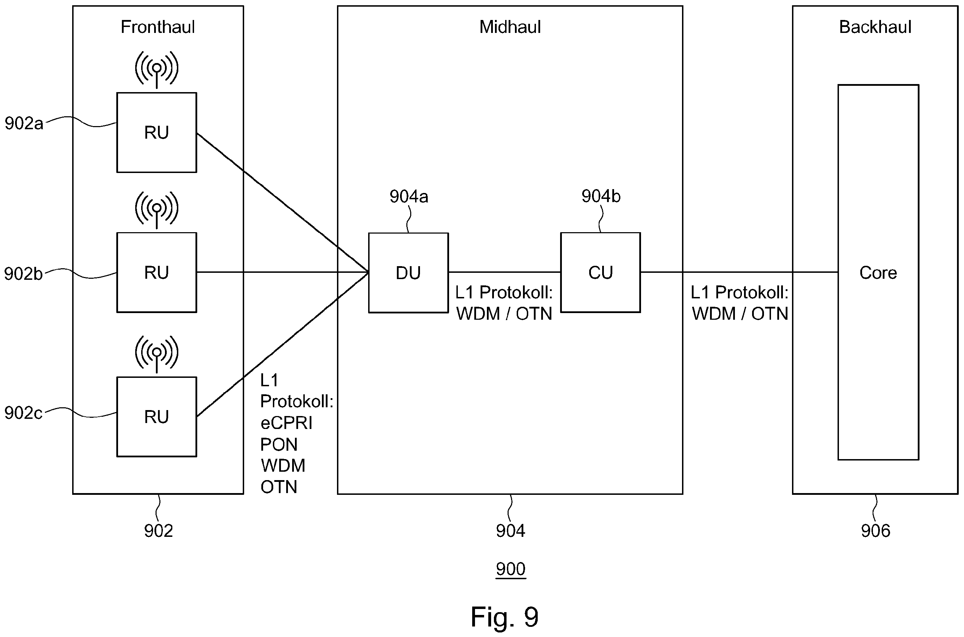

Im Folgenden wird der Aufbau eines Mobilfunknetzes in einem Ausführungsbeispiel beschrieben. Fig. 9 zeigt Architektur und Aufbau eines modernen Mobilfunknetzwerks mit verteiltem Zugriff (auch engl. Radio Access Network (RAN)). Das Mobilfunknetz 900 teilt sich auf in Fronthaul 902, Midhaul 904 und Backhaul 906 eines verteilten RANs. Das Fronthaul 902 umfasst die Radio Units (RU) 902a, 902b und 902c mit der Schnittstelle zu den Distributed Units (DU) 904a. Die Schnittstelle umfasst Protokolle der Schicht 1 (L1), wie beispielsweise eCPRI (enhanced Common Public Radio Interface), PON (Passive Optical Networks), WDM (Wavelength Division Multiplex), OTN (Optical Transport Network).

Durch die Trennung von Distributed Unit (DU) 904a und Central Unit (DU) 904b ist ein Midhaul 904 entstanden und das Backhaul 906 umfasst das 5G/6G Core Netzwerk. Die verwendeten Protokolle auf dem OSI Layer 1 sind in der Abbildung dargestellt.

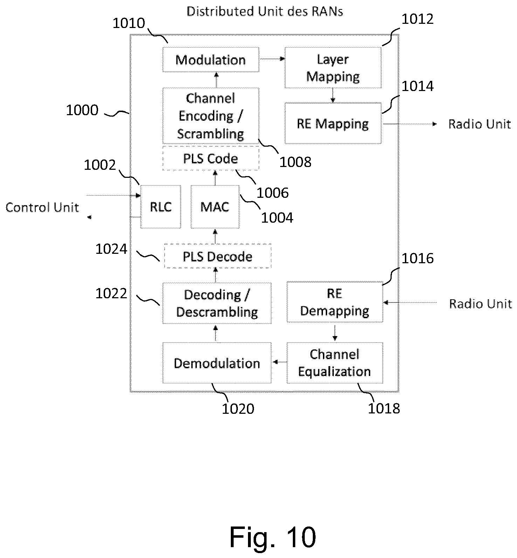

Besondere Beachtung verdient im Sinne von Ausführungsbeispielen die Distributed Unit (DU) 902abc der verteilten RAN Architektur. Die Funktion einer DU wird in Fig. 10 visualisiert. Alle gezeigten Protokolle sind beispielsweise im Sinne der 3GPP Spezifikationen zu verstehen. Fig. 10 zeigt ein Blockdiagramm von Funktionsblöcken einer 5G/6G Distributed Unit (DU). Die DU 1000 terminiert in Block 1002 das RLC-Protokoll (Radio Link Control) und umfasst dort die Schnittstelle zur CU. In Block 1004 terminiert das MAC-Protokoll (Medium Access Control). Die DU 1000 teilt sich dann in einen Senderteil, der in der Fig. 10 oben dargestellt ist und einen Empfängerteil, der in der Fig. 10 unten dargestellt ist. Im Senderzweig wird im Block PLS-Code 1006 das zusätzliche Rauschen eingefügt bevor eine Kanalkodierung und Verwürfelung (Scrambling) 1008 erfolgt. Danach erfolgt die Modulation 1010, ein Abbilden auf die Übertragungsschichten 1012 und schließlich die Zuweisung von Radioressourcen 1014, bevor das Signal an die RU zur eigentlichen Funkübertragung weitergegeben wird.

Im Empfängerteil erfolgt die Signalverarbeitung in umgekehrter Richtung. Nachdem das Signal von der RU empfangen wurde, erfolgt eine Rückgewinnung 1016 aus den zugewiesenen Funkressourcen und eine Kanalentzerrung 1018. Nachfolgend wird das Signal demoduliert 1020 und dekodiert, sowie die Verwürfelung rückgängig gemacht 1022. Nunmehr können die Rauschanteile im Block PLS-Decode 1024 wieder entfernt werden.

In der Distributed Unit 1000, die sich z.B. am Fuße einer Radio Unit oder in kurzem Abstand zu mehreren Radio Units befinden kann, werden die Nachrichten von der Central Unit weiterverarbeitet. Die Distributed Unit übernimmt hier alle Aufgaben, die in Echtzeit zu erfüllen sind. Diese Aufgaben umfassen:

- Real-Time Radio Link Control (RLC) 1002,
- Forward Error Correction (FEC)
- Media Access Control (MAC) 1004,
- Eine Realisierung des physikalischen Kanals (PHY) inklusive Modulation 1010, 1020 des RF Signals und RE Layer Mapping 1012, 1014, 1016.

Die Nachrichten der Control Unit werden über das RLC 1002 entgegengenommen, MAC-Layer 1004 (OSI Layer 2) Operationen des Ethernet Protokolls durchgeführt, eine Forward Error Correction (FEC) 1008 berechnet, die Signale moduliert 1010 und auf die entsprechenden Radio Layer gemappt 1012, 1014 und dann an die Radio Unit weitergeleitet. Der Schritte werden beim Empfang in der entgegengesetzten Reihenfolge durchlaufen. Die Funktionen "PLS-Code" 1006 und "PLS-Decode" 1024- also die Aufbringung und die Dekodierung des PLS-Sicherheitscodes zur Sicherung des physikalischen Kanals, werden ebenfalls durchgeführt.

In diesem Ausführungsbeispiel werden die Module "PLS-Code" 1006 und "PLS-Decode" 1024 zur Aufbringung des PLS-Sicherheitscodes und zur Dekodierung des Sicherheitscodes benutzt, also zum Einfügen und Entfernen der zusätzlichen Rauschanteile auf der physikalischen Schicht. Das Ausführungsbeispiel nutzt ein "modulares Schema" der PLS-Sicherheit, denn diese Signalverarbeitung lässt sich gekapselt in einem separaten Funktionsmodul implementieren.

Der zur PLS-Kodierung/PLS-Dekodierung notwendige Seed wird über die Control Unit bereitgestellt und in der DU während der Anwendung zwischengepuffert. Die Verteilung des gemeinsamen Zufalls wurde bereits in EP 23196965 beschrieben, deren Offenbarung hier mitaufgenommen wird.

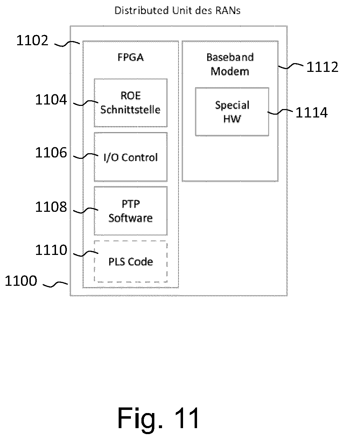

Fig. 11 zeigt eine technische PLS-Realisierung einer 6G DU 1100 mit PLS in einem Ausführungsbeispiel. Dabei illustriert die Fig. 11 einen möglichen technischen Aufbau einer 6G DU 1100. Die DU 110 umfasst, auf ein FPGA (Field Programmable Gate Array) 1102 implementiert, eine Radio-over-Ethernet Schnittstelle (ROE) 1104, eine I/O Kontrolle (Input/Output) 1106, die Synchronisation der Zeit via PTP-Protokoll 1108 sowie den neuen PLS-Code 1110. Diese Komponenten lassen sich effizient auf dem FPGA 1102 implementieren. Ein Basisband-Modem 1112 für den RF-Anteil wird über spezielle, hier nicht näher beschriebene Hardware 1114, betrieben.

Der neue PLS-Anteil ließe sich als separates Modul auf einem FPGA 1102 der Distributed Unit einbetten.

Somit lassen sich unterschiedliche MIMO-Mobilfunkkanäle bzw. "Pencil Beams" mit unterschiedlichen PLS-Codes sichern und somit eine individuelle und nutzerspezifische Sicherung der Kommunikationsstrecke realisieren. Ein Angreifer müsste mit einem qualitativ ähnlichen Empfänger sehr nahe an den rechtmäßigen Empfänger, bzw. sehr nahe an den Mobilfunksender (RU) aufschließen, um die Nachrichten dekodieren zu können. Aufgrund der Nachführung der "Pencil Beams" mit der Bewegung des rechtmäßigen Empfängers ist ein solcher Angriff aufwändig. Alleinig die Mitführung eines Spionageempfängers in der Nähe des rechtmäßigen Empfängers erscheint erfolgsversprechend. Allerdings kann auch dieser Fall bei Verwendung von mehr als 4096 MIMO-Sendeantennen weitestgehend ausgeschlossen werden.

Um eine semantisch sichere Ende-zu-Ende Verbindung zu ermöglichen, müssen die Einstellungen des Netzwerkcodes so gewählt werden, dass der rechtmäßige Empfänger stets einen besseren SNR aufweist als ein möglicher Angreifer. Dazu wird das folgende Protokoll ausgeführt:

1. **Messung des SNRs für jeden potenziellen Empfänger.** Der Empfänger misst und übermittelt den SNR (als Maß für die Übertragungsqualität) seiner Verbindung mit dem Sender an das Kontrollsystem des Senders.
2. **Ermittlung der Parameter für den Sicherheitscode.** Abhängig von den Parametern der Kommunikationsverbindung wird ein PLS-Code festgelegt, der das unerlaubte Abhören der Kommunikation bis zu einem festgelegten Grenz-SNR verhindert. Der Grenz-SNR ist ein zuvor festgelegter Parameter pro Systemverbindung. Er wurde aufgrund der im Theorieteil durchgeführten Berechnungen festgelegt. Zum Beispiel lässt sich der Code so einstellen, dass immer gegenüber einem terrestrischen Drohnenangriff mit einer bestimmten maximalen Antennengröße verteidigt werden kann.

3. **Anwendung des Sicherheitscodes.** Die PLS-Kodierung wird auf die gesendeten Kommunikationsdaten vor der Kanalkodierung und der Modulation auf den Träger angewendet (Die Rauschanteile werden auf der physikalischen Schicht eingefügt).

4. **Ausnutzung eines vorverteilten Seeds.** Jeder Kommunikationspartner des PLS-Systems benötigt einen vorverteilten Seed, d.h. einen Zufallswert oder einen Satz gemeinsam bekannter Zufallszahlen. Der Seed kann über ein Zufallszahlenverteilverfahren vorverteilt werden oder es können Eigenschaften des physikalischen Links verwendet werden, um gemeinsamen Zufall aus dem Kanalrauschen zu destillieren.

5. **Anwendung des Sicherheitscodes zur Dekodierung.** Der Empfänger dekodiert den Sicherheitscode mit Hilfe des vorverteilten Seeds (Entfernt die Rauschanteile auf der physikalischen Schicht).

Durch das Einfügen von zusätzlichem Rauschen wird der Durchsatz der Nutzdaten reduziert. Daher sollte immer so wenig Rauschen wie möglich zugefügt werden. Sollte der PLS-Code die nutzbare Datenmenge zu sehr reduzieren, so lässt sich das Verfahren zumindest auf die Übermittlung von kryptographischen Schlüsseln anwenden. Kryptographische Schlüssel haben typischerweise eine Länge von < 1 kBit.

Das in EP 24174614 beschriebene Verfahren zum PLS-gesicherten Schlüsselaustausch lässt sich ebenfalls auf die Kommunikation zwischen Basisstation und Mobilstation anwenden. Bei genügend weiter Sendeapertur ist das Verfahren bi-direktional sicher. Die ausgetauschten Schlüssel können dann dazu verwendet werden, die Datenverkehre, wie in EP 23196965, zu sichern: zuerst über eine quantensichere symmetrische Verschlüsselung unter Anwendung des zuvor ausgetauschten kryptographischen Schlüssels und danach (zusätzlich) über die Anwendung einer PLS-Kodierung.

Weitere Anwendungsgebiete von Ausführungsbeispielen werden nun näher erläutert.

Ausführungsbeispiele können beispielsweise zur Steuerung und Navigation von Fahrzeugen bzw. Drohnen eigesetzt werden. Die Verwendung von "Pencil Beams" lässt eine individuelle Steuerung von Fahrzeugen und Drohnen zu. Die PLS-Kodierung verhindert dabei unbeabsichtigte Verluste von Information an nicht befugte Empfänger.

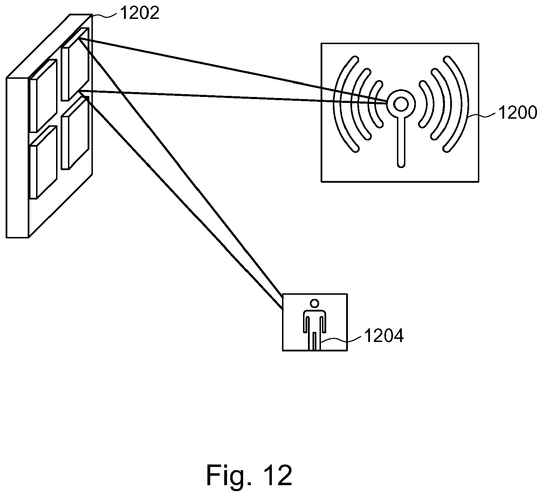

Darüber hinaus kann eine Nutzung von facettenartigen Reflektoren stattfinden. In Städten bzw. in Straßenschluchten lassen sich die "Pencil Beams" über aktive und intelligente Spiegelsysteme weiterleiten. Ein solches Spiegelsystem ist in Fig. 12 dargestellt. Fig. 12 zeigt ein Ausführungsbeispiel mit einem Reflektor oder Spiegel. Das Funksignal von der Basisstation 1200 wird an dem Spiegel 1202 reflektiert und in Richtung des Nutzers 1204 geleitet. Dabei kommen möglichst verlustarme Reflektoren oder Spiegel zum Einsatz. Der "Pencil Beam" kann hier benutzerindividuell umgelenkt werden, so dass die Strahleigenschaften beibehalten werden. Fig. 12 illustriert beispielsweise einen "Pencil Beam" einer RU 1200, die von einem facettenaugenartigen Spiegel 1202 individuell auf einen Verbraucher 1204 gelenkt werden kann. Die Spiegelfacetten sind individuell steuerbar und Teil des 6G Kontrollsystems der MIMO-Keulen Nachführung.

Ein weiteres Ausführungsbeispiel betrifft einen Schlüsselaustausch. Eine 6G Mobilfunkeinheit bestehend aus > 1024 Antennen kann bei Verwendung von PLS gesicherten "Pencil Beams" zum Austausch von kryptographischen Schlüsselmaterial verwendet werden. Sollte der Empfänger in die unmittelbare Umgebung der Sendestation gelangen, könnte die Transmission der Schlüssel stattfinden. Der Signal-zu-Rauschabstand wird in diesem Fall maximal und die transversale Abdeckung des Strahls minimal - es lassen sich also kryptgraphische Artefakte direkt auf ein mobiles Endgerät, einen IoT Sensor oder ein Fahrzeug aufspielen. Die Schlüssel werden lokal auf dem Endgerät gespeichert und später zur symmetrisch-kryptographisch gesicherten Datenübertragung verwendet.

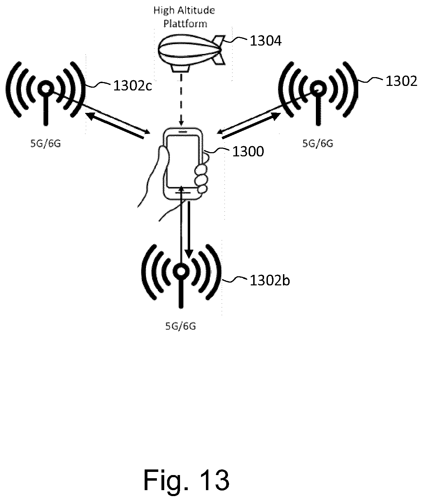

In weiteren Ausführungsbeispielen findet eine Nutzung von Wegevielfalt statt. Ein mobiles Endgerät ist in der Lage, Signale von mehreren Radio Units gleichzeitig zu empfangen. Mit jeder neuen Mobilfunkgeneration nimmt diese Möglichkeit zu. Im 5G Netzwerk sind bereits bis zur 256 verschiedene Verbindungen spezifiziert - sofern es technisch möglich sein sollte, eine derart große Anzahl von Empfängern in ein kleines Mobilfunkgerät zu integrieren. Fig. 13 zeigt ein Szenario unter Ausnutzung verschiedener Wege und Radio Units in Verbindung mit Massive-MIMO. Fig. 13 zeigt die Versorgung eines mobilen Endgerätes 1300 in einem Ausführungsbeispiel. Das mobile Endgerät 1300 wird aus dem 6G Mobilfunknetzwerk über verschiedene Netzwerkpfade, hier repräsentiert durch die RUs 1302a, 1302b und 1302c, mit Information versorgt. Zusätzlich wird eine Höhenplattform, High Altitude Plattform (HAP) 1304 als Versorger dargestellt.

Auf der Senderseite kann das Verfahren 10 demnach ein Fokussieren mehrerer Antennenstrahlen entlang unterschiedlicher Ausbreitungspfade zu dem Empfänger und Senden der geschützten Nachricht an den Empfänger über die mehreren Antennenstrahlen umfassen. Die unterschiedlichen Ausbreitungspfade können dabei unterschiedliche RUs oder Sender nutzen, oder auch die Mehrwegausbreitung eines Mobilfunkkanals nutzen, beispielsweise unter Zuhilfenahme von Reflektoren wie die anhand der Fig. 12 erläutert wurde. Die mehreren Wege können dabei zugunsten einer erhöhten Übertragungskapazität oder auch zur Erhöhung der Abhörsicherheit genutzt werden. So kann in manchen Ausführungsbeispielen das Verfahren 10 ein Einfügen unterschiedlicher Rauschanteile auf der physikalischen Schicht für die mehreren Antennenstrahlen umfassen, sodass die Funksignale der verschiedenen Pfade separat abgesichert sind und das Abhören eines dieser Pfade nicht die Signale der anderen Pfade kompromittiert.

Analog kann das Verfahren 20 auf der Empfängerseite ein Empfangen der geschützten Empfangsnachricht über unterschiedliche Ausbreitungspfade und über mehrere Antennenstrahlen des Senders umfassen. Es kann dann wiederum ein Entfernen der unterschiedlichen Rauschanteile auf der physikalischen Schicht für die mehreren Ausbreitungspfade erfolgen. Darüber hinaus kann das Verfahren und die Ausnutzung der Mehrwegeübertragung sowohl im Uplink (Aufwärtsstrecke) als auch im Downlink (Abwärtsstrecke) genutzt werden, wie dies in der Fig. 13 durch die bidirektionalen Pfeile angedeutet ist. Sender und Empfänger tauschen dann ihre Rollen. Das Verfahren 10 für den Sender kann dann bei der Mobilen 1300 und das Verfahren 20 für den Empfänger an einer Basisstation oder an einem Netzwerkknoten ausgeführt werden, je nachdem wo die mehreren Pfade kombiniert werden.

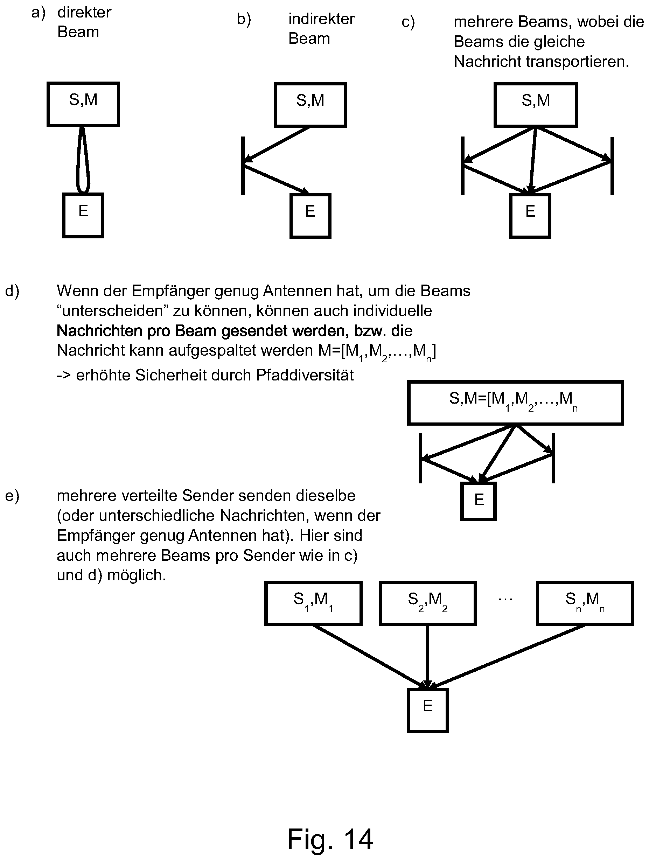

Fig. 14 illustriert verschiedene Übertragungsmodi in Ausführungsbeispielen. Die Fig 14 zeigt Szenarien a), b), c), d) und e) in denen jeweils ein Sender "S" eine Nachricht "M" an einen Empfänger "E" überträgt. In dem Szenario a) links oben geschieht dies über einen direkten Beam/Antennenstrahl. Im Szenario b) wird ein indirekter oder reflektierter Beam verwendet, ähnlich dem Szenario in der Fig. 12. Im Szenario c) links oben werden mehrere Beams verwendet, die die gleiche Nachricht transportieren. Wie die Fig. 14 c) zeigt, können dabei auch mehrere Reflektoren zum Einsatz kommen. Das Szenario d) zeigt den Fall, wenn der Empfänger ebenfalls mehrere Antennen hat und die einzelnen Pfade per Strahlformung trennen kann. Die Beams können dann empfängerseitig unterschieden werden und damit können auch individuelle Nachrichten über die Beams gesendet werden, bzw. die Nachricht kann aufgespalten werden, was zu einer erhöhten Sicherheit durch Ausnutzen der Pfaddiversität führt. Dabei können die einzelnen Nachrichten vor oder nach dem Aufspalten PLS-kodiert werden. Schließlich zeigt die Fig. 14 unten noch ein Szenario e), bei dem mehrere verteilte Sender dieselbe oder unterschiedliche Nachrichten an den Empfänger senden, wieder unter der Annahme das empfängerseitig genügend Antennen zum Trennen der Signale der Sender vorhanden sind. In diesem Szenario sind auch mehrere Beams pro Sender wie in c) und d) denkbar.

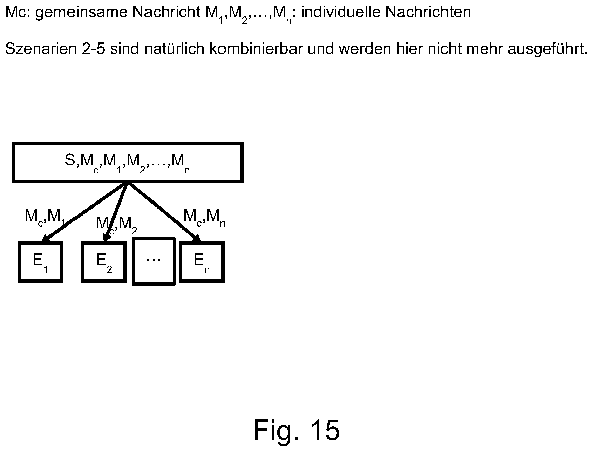

Fig. 15 zeigt ein Übertragungsszenario mit mehreren Empfängern in einem Ausführungsbeispiel. Hier werden von einem Sender aus an mehrere Empfänger (Multi User, MU) eine gemeinsame und jeweils eine individuelle Nachricht gesendet. Die einzelnen Empfänger erhalten jeweils die gemeinsame Nachricht $M_c$ und eine individuelle Nachricht $M_i$. Die in den Fign. 14 und 15 dargestellten Szenarien sind auch kombinierbar. Darüber hinaus können auch unterschiedliche Bänder mit hinzugenommen werden, d.h. eine Multi User, Multi Message-Übertragung über verschiedene Frequenzblöcke (falls ein Provider mehrere Blöcke bedient). Denkbar ist auch die Verwendung von zwei MIMO Netzwerken unterschiedlicher Provider, z.B. Operator/Betreiber 1 (SIM1, Subscriber Identity Module 1) und Operator/Betreiber 2 (SIM2, Subscriber Identity Module 2). Dabei können beispielsweise Dual-SIM-Endgeräte für besonders sichere Kommunikation verwendet werden. Die Nachrichten werden dann über zwei disjunkte Netzwerke gesendet, wobei jedes Netzwerk separat einen der in den Fign. 14 und 15 erläuterten Übertragungsmodi verwenden kann.

In einigen Ausführungsbeispielen kann das Verfahren 10 zur Kontrolle des Senders darüber hinaus ein Generieren mehrerer geschützter Nachrichten basierend auf einer Ursprungsnachricht und ein Senden der mehreren geschützten Nachrichten über die mehreren Antennenstrahlen und/oder über mehrere Sender an den Empfänger umfassen. Dabei kann eine Teilmenge der geschützten Nachrichten zum Rekonstruieren der Ursprungsnachricht ausreichend sein. Auf diese Art und Weise kann ein gewisser Nachrichtenverlust eingeplant werden und gleichzeitig die Abhörsicherheit erhöht werden. Auf der Empfängerseite kann das Verfahren 20 dann ein Empfangen mehrerer geschützter Empfangsnachrichten, die auf einer Ursprungsnachricht basieren, über die mehreren Ausbreitungspfade und/oder von mehreren Sendern umfassen, und ein Rekonstruieren der Ursprungsnachricht basierend auf den mehreren geschützten Empfangsnachrichten. Die mehreren geschützten Empfangsnachrichten können zum Rekonstruieren der Ursprungsnachricht ausreichen, auch wenn sie nur eine Teilmenge der gesendeten Nachrichten sind.

In manchen Ausführungsbeispielen umfasst das senderseitige Verfahren 10 ein Generieren von weiteren Zufallszahlen und ein Bestimmen von ein oder mehreren kryptografischen Schlüsseln auf Basis der weiteren Zufallszahlen. Darüber hinaus umfasst das Verfahren ein Sichern der kryptographischen Schlüssel als Nachricht für die Übertragung durch das Einfügen der Rauschanteile und ein Übertragen der gesicherten kryptografischen Schlüssel an ein oder mehrere weitere Sendeempfänger über die mehreren Antennenstrahlen. Analog kann das empfängerseitige Verfahren 20 dann einer Rekonstruktion der Ursprungsnachricht und damit ein oder mehrerer kryptografischer Schlüssel umfassen.

Vorteile der Nutzung der Wegevielfalt sind:

- Besseres Signal-zu-Rausch Verhältnis bei dem mobilen Endgerät durch Nutzung multipler Netzwerkpfade, da alle Versorger dasselbe Signal senden und das Endgerät diese kombiniert.
- Sofern jeder der Pfade durch PLS gesichert ist und die übermittelte Information über die verschiedenen Pfade "gespreizt" wird, d.h. es wird nicht dieselbe Information über alle Pfade gleichzeitig gesendet, so erhöht sich die Sicherheit der Informationsübertragung für das Endgerät.
- Die "Spreizung" kann erreicht werden durch:

o Netzwerkseitige Aufteilung der Verkehre und deren Übermittlung über unterschiedliche Pfade,
o Nutzung von Algorithmen wie "Simon Key Sharing", um kryptographische Schlüssel redundant aufzuteilen, so dass der finale Schlüssel durch Kombination der einzelnen Nachrichten im Endgerät berechnet werden kann. Das Verfahren beinhaltet eine Redundanz, so dass nicht notwendigerweise alle Nachrichten vom Endgerät empfangen werden müssten. Eine Alternative ist die Verwendung von anderen Codes die Redundanz hinzufügen, wie beispielsweise Reed-Solomon Codes.

- Richtungsabhängigkeit der Übertragungen, d.h. ein Angreifer müsste im Kreuzungspunkt der Nachrichten stehen, um alle Nachrichten empfangen zu können. Hier kann auch eine High Altitude Plattform, mit ihrer Übertragungsrichtung von oben, ihre Vorteile ausspielen.

In weiteren Ausführungsbeispielen kann das Verfahren 10 ein zusätzliches Verschlüsseln der Nachricht mit einem post-quantum-kryptografischen Verschlüsselungsalgorithmus umfassen. Analog kann das Verfahren ein zusätzliches Entschlüsseln der Nachricht mit dem post-quantum-kryptografischen Verschlüsselungsalgorithmus umfassen.

Quantensichere Verschlüsselung, auch bekannt als post-quantum Verschlüsselung, bezieht sich auf kryptografische Algorithmen, die gegen Angriffe durch Quantencomputer resistent sind. Diese Art der Verschlüsselung ist notwendig, weil Quantencomputer bestimmte mathematische Probleme, auf denen die derzeitige klassische Kryptographie basiert, wesentlich schneller lösen können. Aktuelle Verschlüsselungsmethoden wie RSA (Rivest-Shamir-Adleman) und ECC (Elliptic Curve Cryptography) basieren auf mathematischen Problemen wie der Faktorisierung großer Zahlen und der Berechnung diskreter Logarithmen. Diese Probleme sind für klassische Computer schwer zu lösen, was die Sicherheit der Verschlüsselung gewährleistet. Mit Algorithmen wie Shors Algorithmus können Quantencomputer diese Probleme jedoch effizient lösen, was bedeutet, dass sie die derzeitigen Verschlüsselungsmethoden brechen könnten. Quantensichere Algorithmen basieren auf mathematischen Problemen, die auch für Quantencomputer schwer zu lösen sind. Beispiele hierfür sind: Gitterbasierte Kryptographie (z.B. Learning with Errors - LWE), Code-basierte Kryptographie (z.B. McEliece-Kryptosystem), Hash-basierte Signaturen (z.B. Lamport-Signaturen), Multivariat-polynomiale Kryptographie, Isogenie-basierte Kryptographie, etc. Die Sicherheitsstufe dieser Algorithmen wird so bewertet, dass sie auch gegenüber einem zukünftigen, leistungsfähigen Quantencomputer standhalten können.

Organisationen wie das National Institute of Standards and Technology (NIST) arbeiten an der Standardisierung quantensicherer Algorithmen, um deren breite Anwendung in der Praxis zu fördern. Beispiele für quantensichere Verschlüsselungsalgorithmen, die in Ausführungsbeispielen zum Einsatz kommen können sind Lattice-based Cryptography, Learning with Errors (LWE) und Ring-Learning with Errors (Ring-LWE), Code-based Cryptography, z.B. das McEliece-Kryptosystem verwendet lineare Fehlerkorrekturcodes und gilt als robust gegenüber Quantenangriffen. Ein weiteres Beispiel sind Hash-based Signatures, beispielsweise Lamport-Signaturen und deren Varianten sind einfache, aber sichere Methoden zur Erstellung digitaler Signaturen, die auch gegen Quantenangriffe sicher sind.

Zumindest manche Ausführungsbeispiele liefern die damit die folgenden Effekte:

∘ PLS ist informationstheoretisch sicher, sofern das SNR eines Angreifers schlechter ist als das eines rechtmäßigen Empfängers.
∘ Ergänzt die kryptographische Verschlüsselung der Nachrichten durch einen unabhängigen Sicherheitsvektor. PLS und Kryptographie schützen einen Kommunikationskanal auf unterschiedlichen, disjunkten Wegen.
∘ Entropieverteilung über klassische Netzwerke möglich (geheim, verschlüsselt oder offen) zur Verteilung des Seeds. Der Seed darf, muss aber nicht öffentlich sein. Ein geheimer Seed ist besser als öffentlicher Seed.
∘ Resilientes Sicherheitsverfahren, was durch dynamische Anpassung des Seeds bzw. der Seed Längen beim Code ausgenutzt werden kann.
∘ Günstige Lösung.
∘ Integrierbar in die Konzepte zu 6G und die Quantensicherheit bei 5G/6G Netzwerken.
∘ Schützt 6G Mobilfunk Kommunikation über MIMO vor Informationsverlusten durch Streuung, Beugung, oder atmosphärischen Einflüssen. Schützt vor Angreifern, die sich dem rechtmäßigen Empfänger transversal bzw. longitudinal nähern.
∘ Ausnutzung, dass mit MIMO und einer (realistisch) hohen Anzahl von Sendeantennen schmale Pencil-Beams erzeugt werden können.
∘ Pfaddiversifizierung über verschiedene Pfade einer Konstellation ermöglicht eine deutliche Erhöhung der Sicherheit.
∘ Ermöglich die quantensichere Verteilung kryptographischer Schlüssel in Mobilfunknetzwerken.

Zusammenfassend lässt sich festhalten das die Theorie zu PLS ausgearbeitet ist, vgl. auch EP 22209986, EP 23196965 und EP 24174614. Sicherheitsbeweise abhängig von dem S/R des möglichen Angreifers existieren und sind als Demonstrator in WiFi Netzwerken und 5G Netzwerken existent. Erste Demonstratoren für Satellitennetzwerke entstehen.

High-Altitude Plattformen sind mögliche Realisierungen eines nicht-terrestrischen Netzwerks als zusätzlicher, dritter Layer zwischen der terrestrischen und der Satelliten Ebene. Diverse Hersteller von High Altitude Plattformen, die mit Hilfe von stratosphärischen Flugzeugen, Ballons o.ä. realisiert werden, sind bekannt. 6G Mobilfunk ist ein Forschungsthema. In Deutschland wird diese Forschung im Rahmen von 6G Forschungs-HUBs, die durch das BMBF finanziert wird, durchgeführt. Die Mobilfunk Gerätehersteller und Provider forschen ebenfalls an eine 6G Strategie und Realisierungsmöglichkeiten. In der Mobilfunkarchitektur existiert das distributed (verteilte) RAN und wird im Rahmen von 5G ausgehend kontinuierlich weiterentwickelt. Quantencomputer bedrohen die Sicherheit der aktuell standardisierten klassischen kryptographischen Methoden.

Weitere Details finden sich in:

- https://www.japcc.org/articles/high-altitude-platform-systems/
- GlobeCom 22 Studie, L. Torres-Figueroa, M. Hörmann, M. Wiese, U. J. Mönich, H. Boche, O. Holschke, and M. Geitz, "Implementation of physical layer security into 5G NR systems and E2E latency assessment," in Proceedings of the IEEE Global Telecommunications Conference, 2022 (GLOBECOM '22), 2022, pp. 4044-4050, doi: 10.1109/GLOBECOM48099.2022.10001457
- M. Bloch, M. Hayashi and A. Thangaraj, "Error-control coding for physical-layer secrecy," Proc. IEEE, vol. 103, no. 10, pp. 1725-1746, 2015.
- https://www.ssk.de/SharedDocs/Beratungsergebnisse/DE/2021/2021-12-10_Stgn_5G_Mobilfunk.pdf?_blob=publicationFile&v=4
- https://www.researchgate.net/figure/Beam-patterns-of-1024-element-large-scale-linear-an-tenna-array-LSLAA-obtained-by_fig3_338084772
- hf-praxis 11-2019, Zeitschrift HF-Praxis aus dem November 2019,
- https://www.researchgate.net/publication/252502511_Large-Array_Signal_Processing_for_Deep-Space_Applications/link/540f2f410cf2f2b29a3dd678/download
- https://www.everythingrf.com/rf-calculators/parabolic-reflector-antenna-gain

Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Beispiele können weiterhin ein (Computer-)Programm mit einem Programmcode zum Ausführen eines oder mehrerer der obigen Verfahren sein oder sich darauf beziehen, wenn das Programm auf einem Computer, einem Prozessor oder einer sonstigen programmierbaren Hardwarekomponente ausgeführt wird. Schritte, Operationen oder Prozesse von verschiedenen der oben beschriebenen Verfahren können also auch durch programmierte Computer, Prozessoren oder sonstige programmierbare Hardwarekomponenten ausgeführt werden. Beispiele können auch Programmspeichervorrichtungen, z.B. Digitaldatenspeichermedien, abdecken, die maschinen-, prozessor- oder computerlesbar sind und maschinenausfuhrbare, prozessorausfuhrbare oder computerausführbare Programme und Anweisungen codieren beziehungsweise enthalten. Die Programmspeichervorrichtungen können z.B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren, Steuereinheiten, feld-programmierbare Logik-Arrays ((F)PLAs = (Field) Programmable Logic Arrays), feld-programmierbare Gate-Arrays ((F)PGA = (Field) Programmable Gate Arrays), Grafikprozessoren (GPU = Graphics Processor Unit), anwendungsspezifische integrierte Schaltungen (ASIC = application-specific integrated circuit), integrierte Schaltungen (IC= Integrated Circuit) oder Ein-Chip-Systeme (SoC = System-on-a-Chip) abdecken, die zum Ausführen der Schritte der oben beschriebenen Verfahren programmiert sind.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1.  Ein Verfahren (10) zur Kontrolle ein oder mehrerer Sender (300) und zur Sicherung einer Funkverbindung zwischen einem Sender (300) und einem Empfänger (400) in einem Mobilfunksystem (500), mit

    Fokussieren (11) eines Antennenstrahls mit einer oder mehreren Antennen, sodass der Empfänger (400) in einer Hauptabstrahlrichtung des Antennenstrahls liegt und eine Halbwertsbreite des Antennenstrahls kleiner als 1% eines Abstands zu den ein oder mehreren Antennen ist; Einfügen (12), auf der physikalischen Schicht, von zusätzlichen Rauschanteilen in eine Nachricht für den Empfänger (400), um eine geschützte Nachricht für den Empfänger (400) zu erhalten, wobei das Einfügen (12) der Rauschanteile auf einer oder mehreren auch dem Empfänger (400) bekannten Zufallszahlen beruht; und
    Senden (13) der geschützten Nachricht an den Empfänger (400) über den Antennenstrahl.

2.  Das Verfahren (10) gemäß Anspruch 1, ferner umfassend Empfangen einer Rückmeldung über eine Übertragungsqualität von dem Empfänger (400) und Einstellen eines oder mehrerer Übertragungsparameter für das Senden der geschützten Nachricht und/oder Einstellen einer Vorschrift für das Einfügen der Rauschanteile,

    basierend auf der Übertragungsqualität und basierend auf einem zur Absicherung der Funkverbindung notwendigen Signalqualitätsunterschied für einen Abhörer relativ zu einer Signalqualität beim legitimen Empfänger (400), und/oder
    basierend auf der Übertragungsqualität und basierend auf einem geschätzten Signalqualitätsunterschied für einen Abhörer relativ zu einer Signalqualität beim legitimen Empfänger (400), um die Nachricht vor einem Abhören zu sichern.

3.  Das Verfahren (10) gemäß einem der Ansprüche 1 oder 2, ferner umfassend Fokussieren mehrerer Antennenstrahlen entlang unterschiedlicher Ausbreitungspfade zu dem Empfänger (400) und Senden der geschützten Nachricht an den Empfänger (400) über die mehreren Antennenstrahlen.

4.  Das Verfahren (10) gemäß Anspruch 3, ferner umfassend Einfügen unterschiedlicher Rauschanteile auf der physikalischen Schicht für die mehreren Antennenstrahlen.

5.  Das Verfahren (10) gemäß einem der Ansprüche 3 oder 4, ferner umfassend Generieren mehrerer geschützter Nachrichten basierend auf einer Ursprungsnachricht und Senden der mehreren geschützten Nachrichten über die mehreren Antennenstrahlen und/oder über mehrere Sender (300) an den Empfänger (400).

6.  Das Verfahren (10) gemäß Anspruch 5, wobei eine Teilmenge der geschützten Nachrichten zum Rekonstruieren der Ursprungsnachricht ausreichend ist.

7.  Das Verfahren (10) gemäß einem der Ansprüche 3 bis 6, ferner umfassend

    Generieren von weiteren Zufallszahlen;
    Bestimmen von ein oder mehreren kryptografischen Schlüssels auf Basis der weiteren Zufallszahlen,
    Sichern der kryptographischen Schlüssel als Nachricht für die Übertragung durch das Einfügen der Rauschanteile; und
    Übertragen der gesicherten kryptografischen Schlüssel an ein oder mehrere weitere Sendeempfänger über die mehreren Antennenstrahlen.

8. Das Verfahren (10) gemäß einem der vorangehenden Ansprüche, ferner umfassend zusätzliches Verschlüsseln der Nachricht mit einem post-quantum-kryptografischen Verschlüsselungsalgorithmus.

9. Ein Verfahren (20) zur Kontrolle eines Empfängers (400) und zur Sicherung einer Funkverbindung zwischen einem Sender (300) und dem Empfänger (400) in einem Mobilfunksystem (500), mit

Kommunizieren (21) von Kontrollinformation mit dem Sender (300), wobei die Kontrollinformation dem Sender (300) ermöglicht einen Antennenstrahl einer oder mehrerer Antennen zu fokussieren, sodass der Empfänger (400) in einer Hauptabstrahlrichtung des Antennenstrahls liegt und eine Halbwertsbreite des Antennenstrahls kleiner als 1% eines Abstands zu den ein oder mehreren Antennen ist;
Empfangen einer geschützten Empfangsnachricht von dem Sender (300);
Entfernen, auf der physikalischen Schicht, von zusätzlichen Rauschanteilen aus der geschützten Nachricht, um eine rauschreduzierte Nachricht zu erhalten, wobei das Entfernen auf einem oder mehreren auch dem Sender bekannten Zufallswerten beruht; und
Dekodieren der rauschreduzierten Nachricht.

10. Das Verfahren (20) gemäß Anspruch 9, ferner umfassend Empfangen der geschützten Empfangsnachricht über unterschiedliche Ausbreitungspfade und über mehrere Antennenstrahlen des Senders (300) und/oder Entfernen unterschiedlicher Rauschanteile auf der physikalischen Schicht für die mehreren Ausbreitungspfade.

11. Das Verfahren (20) gemäß Anspruch 10, ferner umfassend Empfangen mehrerer geschützter Empfangsnachrichten, die auf einer Ursprungsnachricht basieren, über die mehreren Ausbreitungspfade und/oder von mehreren Sendern (300) und Rekonstruieren der Ursprungsnachricht basierend auf den mehreren geschützten Empfangsnachrichten.

12. Das Verfahren (20) gemäß Anspruch 11, wobei die mehreren geschützten Empfangsnachrichten zum Rekonstruieren der Ursprungsnachricht ausreichen und eine Teilmenge der gesendeten Nachrichten sind.

13. Ein Computerprogramm mit einem Programmcode zur Durchführung eines der Verfahren (10; 20) gemäß einem der Ansprüche 1 bis 12, wenn der Programmcode auf einem Computer, einem Prozessor oder einer programmierbaren Hardwarekomponente ausgeführt wird.

14. Eine Vorrichtung (30) zur Kontrolle ein oder mehrerer Sender (300) und zur Sicherung einer Funkverbindung zwischen einem Sender (300) und einem Empfänger (400) in einem Mobilfunksystem (400), mit

ein oder mehreren Schnittstellen (32), die zur Kommunikation mit einem oder mehreren Senderkomponenten ausgebildet sind; und
ein oder mehreren Signalverarbeitungskomponenten (34), die ausgebildet sind, um eines der Verfahren (10) gemäß einem der Ansprüche 1 bis 8 auszuführen.

15. Eine Vorrichtung (40) zur Kontrolle eines Empfängers (400) und zur Sicherung einer Funkverbindung zwischen einem Sender (300) und dem Empfänger (400) in einem Mobilfunksystem (500), mit

ein oder mehreren Schnittstellen (42), die zur Kommunikation mit einem oder mehreren Empfängerkomponenten ausgebildet sind; und
ein oder mehreren Signalverarbeitungskomponenten (44), die ausgebildet sind, um eines der Verfahren (20) gemäß einem der Ansprüche 9 bis 12 auszuführen.

Fokussieren eines Antennenstrahls mit einer oder mehreren Antennen, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist

11

Einfügen, auf der physikalischen Schicht, von zusätzlichen Rauschanteilen in eine **Nachricht für den Empfänger, um eine geschützte Nachricht für den Empfänger zu** erhalten, wobei das Einfügen der Rauschanteile auf einer oder mehreren auch dem Empfänger bekannten Zufallszahlen beruht

12

Senden der geschützten Nachricht an den Empfänger über den Antennenstrahl

13

<u>10</u>

# Fig. 1

Kommunizieren von Kontrollinformation mit dem Sender, wobei die Kontrollinformation dem Sender ermöglicht einen Antennenstrahl einer oder mehrerer Antennen zu fokussieren, sodass der Empfänger in einer Hauptabstrahlrichtung des Antennenstrahls liegt und eine Halbwertsbreite des Antennenstrahls kleiner als 1% eines Abstands zu den ein oder mehreren Antennen ist

21

Empfangen einer geschützten Empfangsnachricht von dem Sender

22

Entfernen, auf der physikalischen Schicht, von zusätzlichen Rauschanteilen aus der geschützten Nachricht, um eine rauschreduzierte Nachricht zu erhalten, wobei das Entfernen auf einem oder mehreren auch dem Sender bekannten Zufallswerten beruht

23

Dekodieren der rauschreduzierten Nachricht.

24

20

Fig. 2

Ein oder mehrere
Signalverarbeitungskomponenten

34

Ein oder mehrere
Schnittstellen

32

30

300

Ein oder mehrere
Signalverarbeitungskomponenten

44

Ein oder mehrere
Schnittstellen

42

40

400

500

Fig. 3

Message

408

PLS
Decoder

406

Rx

Noise

Eve
Rx

410

Tx

404

402

PLS
Coder

Message

Fig. 4

herkömmliche Antenne
ohne Beamforming

Beamforming mit
einem Beam

Ansicht von der Seite

Ansicht von der Seite

Ansicht von oben

Ansicht von oben

FIG. 5

EP 4 668 813 A1

EP 4 668 813 A1

Fig. 6

Fig. 7

Fig. 8

Fig. 9

Distributed Unit des RANs

Fig. 10

Distributed Unit des RANs

1102 — FPGA  Baseband Modem — 1112

1104 — ROE Schnittstelle  Special HW — 1114

1106 — I/O Control

1108 — PTP Software

1110 — PLS Code

1100

Fig. 11

Fig. 12

High Altitude
Plattform

1304

1302c

1302

5G/6G

5G/6G

1300

1302b

5G/6G

# Fig. 13

a) direkter
   Beam

b) indirekter
   Beam

c) mehrere Beams, wobei die
   Beams die gleiche
   Nachricht transportieren.

S,M

E

S,M

E

S,M

E

d) Wenn der Empfänger genug Antennen hat, um die Beams
   "unterscheiden" zu können, können auch individuelle
   **Nachrichten pro Beam gesendet werden, bzw. die**
   Nachricht kann aufgespalten werden M=[$M_1$,$M_2$,...,$M_n$]

   -> erhöhte Sicherheit durch Pfaddiversität

S,M=[$M_1$,$M_2$,...,$M_n$]

E

e) mehrere verteilte Sender senden dieselbe
   (oder unterschiedliche Nachrichten, wenn der
   Empfänger genug Antennen hat). Hier sind
   auch mehrere Beams pro Sender wie in c)
   und d) möglich.

$S_1$,$M_1$

$S_2$,$M_2$

...

$S_n$,$M_n$

E

# Fig. 14

Mc: gemeinsame Nachricht $M_1$,$M_2$,…,$M_n$: individuelle Nachrichten

Szenarien 2-5 sind natürlich kombinierbar und werden hier nicht mehr ausgeführt.

Fig. 15

Europäisches Patentamt
European Patent Office
Office européen des brevets

# EUROPÄISCHER RECHERCHENBERICHT

Nummer der Anmeldung

EP 24 18 2979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHEN XIAOMING ET AL: "A Survey on Multiple-Antenna Techniques for Physical Layer Security", IEEE COMMUNICATIONS SURVEYS & TUTORIALS, Bd. 19, Nr. 2, 29. November 2016 (2016-11-29), Seiten 1027-1053, XP011651829, DOI: 10.1109/COMST.2016.2633387 * Seite 1029 - Seite 1042 * * Abbildungen 2,4,5 * ----- | 1-15 | INV. H04W12/033 H04W12/122 H04B7/06 |
| X | LU LV ET AL: "Safeguarding Next Generation Multiple Access Using Physical Layer Security Techniques: A Tutorial", ARXIV.ORG, CORNELL UNIVERSITY LIBRARY, 201 OLIN LIBRARY CORNELL UNIVERSITY ITHACA, NY 14853, 18. Mai 2024 (2024-05-18), XP091760645, * Seite 8 - Seite 20 * ----- | 1-15 | |
| A | WO 2014/204070 A1 (LG ELECTRONICS INC [KR]) 24. Dezember 2014 (2014-12-24) * Seite 11 - Seite 15 * ----- | 1-15 | RECHERCHIERTE SACHGEBIETE (IPC) H04W H04B |

Der vorliegende Recherchenbericht wurde für alle Patentansprüche erstellt

| Recherchenort | Abschlußdatum der Recherche | Prüfer |
|---|---|---|
| München | 20. November 2024 | Kraska, Nora |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 18 2979

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2024

| Im Recherchenbericht angeführtes Patentdokument | Datum der Veröffentlichung | Mitglied(er) der Patentfamilie | Datum der Veröffentlichung |
|---|---|---|---|
| WO 2014204070 A1 | 24-12-2014 | US 2016087349 A1<br>WO 2014204070 A1 | 24-03-2016<br>24-12-2014 |

Für nähere Einzelheiten zu diesem Anhang : siehe Amtsblatt des Europäischen Patentamts, Nr.12/82

**EP 4 668 813 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 22209986 A
- EP 23196965 A
- EP 24174614 A
- EP 24174614

**In der Beschreibung aufgeführte Nicht-Patentliteratur**

- **M. BLOCH** ; **M. HAYASHI** ; **A. THANGARAJ**. Error-control coding for physical-layer secrecy. *Proc. IEEE*, 2015, vol. 103 (10), 1725-1746
- **L. TORRES-FIGUEROA** ; **M. HÖRMANN** ; **M. WIESE** ; **U. J. MÖNICH** ; **H. BOCHE** ; **O. HOLSCHKE** ; **M. GEITZ**. Implementation of physical layer security into 5G NR systems and E2E latency assessment. *Proceedings of the IEEE Global Telecommunications Conference, 2022 (GLOBECOM '22)*, 2022, 4044-4050
- hf-praxis 11-2019. *Zeitschrift HF-Praxis*, November 2019